# EUROPEAN PATENT SPECIFICATION

(11) **EP 2 222 186 B1**
(45) Date of publication and mention of the grant of the patent: **12.10.2011**
(21) Application number: 08849644.3
(22) Date of filing: 14.11.2008
(51) Int. Cl.: A23J 3/04, A23L 1/311, A23L 1/318

(54) **COMPOSITION DERIVED FROM A MEAT SOURCE AND PROCESSES FOR MAKING AND USING COMPOSITION**
ZUSAMMENSETZUNG, DIE VON FLEISCH ALS AUSGANGSMATERIAL ABSTAMMT, UND VERFAHREN ZUR HERSTELLUNG UND VERWENDUNG DER ZUSAMMENSETZUNG
COMPOSITION DÉRIVÉE D'UNE SOURCE DE VIANDE, PROCÉDÉS DE FABRICATION ET D'UTILISATION DE LA COMPOSITION

(30) Priority: 14.11.2007 US 988039 P
(43) Date of publication of application: 01.09.2010
(73) Proprietor: Bumble Bee Foods, LLC, San Diego, CA 92123 (US); MPF, INC., Kensington, New Hampshire 03833 (US)
(72) Inventor: HUDSON, Heather, San Diego, CA 92123 (US); BADER, Derek, Ray, Slidell, LA 70460 (US)
(74) Representative: Weinberger, Rudolf
(86) International application number: PCT/US2008/012830
(87) International publication number: WO 2009/064487

(56) References cited:
- EP-A- 1 552 755
- WO-A-2007/059262
- US-A- 3 552 978
- US-A1- 2004 058 035
- US-A1- 2005 064 085
- US-A1- 2007 098 858

## Description

### BACKGROUND OF THE INVENTION

### Field Of The Invention

The present invention generally relates to food processing, and more particularly to products and processes for reducing losses of water and nutrients associated with cooking animal muscle.

### Related Art

Animal muscle proteins have been employed in food processing for their functional ability to improve various properties of the food to which they are added (e.g., flavor, texture, nutritional value, and preservation). For example, the process of cooking a food typically causes loss of water and nutrients present therein. Animal muscle proteins may be added to uncooked food to improve the water retention capacity of the food during cooking. Processes for achieving improved water retention capacity have typically involved isolating proteins from their meat source and incorporating the isolated proteins in the food being processed. The meat source from which the proteins are isolated may be identical to the food being processed, if necessary to meet any standards of identity imposed by government regulations, e.g., FDA regulations. For example, proteins may be isolated from albacore, as the meat source, and applied to uncooked albacore prior to cooking.

Animal muscle proteins may be recovered from an animal meat source by grinding the source animal meat and placing the ground meat in solution. Connective tissue and other insolubles, including lipids, fats, oils, bone and skin, are removed by various means, such as centrifuging or straining. The solution may be basic or acidic, at a pH that solubilizes the proteins. The pH of the solution may then be adjusted to the isoelectric point at which the solubilized protein would precipitate from solution (typically, at a pH of about 5.0 and 5.5). A dewatering step is then employed for separating the water from the proteins, thereby isolating the protein. An example protein isolate process is described in U.S. Patent No. 7,033,636, which is incorporated herein in its entirety by reference thereto.

However, protein isolates lack the nutritional constituents that were removed with the water, and therefore protein isolates are not nutritionally equivalent to the source meat. Additionally, government regulations may require ingredient labeling of a food product that has been processed using protein isolates to provide that modified proteins have been included in the food.

Alternatively, the isolated protein may be prepared into a slurry that is processed to form a marinade, which is then applied to the food prior to cooking, such as by injection into the food or by surface application. The slurry is typically frozen to prevent its denaturation during the lead-time from its initial preparation to its final application to the food substrate. Cold storage and refrigerated transportation is then needed to transport the protein to the food processing plant. Moreover, the slurry has a high moisture content, with a protein content of less than 10 percent, and therefore shipping charges on a $/1b protein basis may be high.

Given the foregoing, what is needed in this industry is a composition derived from a meat source that has a nutritional equivalency with the source meat, and a cost-effective process for making the composition, as well as for using the composition in food processing.

### SUMMARY OF THE INVENTION

The present invention meets the above-identified needs by providing a composition derived from a meat source, that is formed from a process involving a mixed slurry of water and meat, or animal muscle, in which the animal protein is solubilized and not thereafter concentrated, fractionated, coagulated or otherwise isolated (e.g., by the dewatering step used by conventional processes described above). As such, a process in accordance with the present invention produces a composition with nutritional equivalency to the source meat, because no nutritional constituents are lost via dewatering. The composition may then be applied to an uncooked food substrate (fresh or frozen) to improve its water-binding capacity during cooking. The composition may also be applied to a cooked food substrate or a par cooked food substrate.

One embodiment of the present invention provides a process for improving water-binding capacity of a substrate animal muscle. The process includes the steps of providing a slurry of animal muscle and water; increasing the pH of the slurry to an alkaline level sufficient to solubilize at least a portion of the animal protein in the animal muscle so as to form an alkaline slurry; maintaining the pH of the alkaline slurry at a level sufficient to prevent coagulation of the animal protein; drying the alkaline slurry to form a substantially dry particulate animal muscle product; reconstituting the particulate animal muscle product to form a marinade; and applying the marinade to a substrate animal muscle.

In one embodiment, the step of increasing the pH of the slurry includes increasing the pH of the slurry to a pH of about 11 to form the alkaline slurry, and the step of maintaining the pH of the alkaline slurry includes; reducing the pH of the alkaline slurry from the pH of about 11 to a pH of about 9; adding a salt and a buffer to the alkaline slurry; and increasing the pH of the alkaline slurry from the pH of about 9 to a pH in the range of about 10 to about 10.5, wherein the alkaline slurry has a pH in the range of about 10 to about 10.5 prior to being dried.

In another embodiment, the step of increasing the pH of the slurry includes increasing the pH of the slurry to a pH of about 10 to form the alkaline slurry, and the step of maintaining the pH of the alkaline slurry includes: adding a salt and a buffer to the alkaline slurry; and maintaining the alkaline slurry at a pH of about 9, wherein the alkaline slurry has a pH of about 9 prior to being dried.

The process may further include the step of removing animal connective tissue from one of the slurry and the alkaline slurry. The step of drying may include spray-drying the alkaline slurry. The step of reconstituting the particulate animal muscle product may include adding water to the particulate animal muscle product. The step of applying may include injecting the marinade into the substrate animal muscle. In one embodiment, the marinade is applied to a surface of the substrate animal muscle.

The alkaline slurry may include animal protein solids in the amount of less than 10 percent by weight of the alkaline slurry, and in one embodiment, the particulate animal muscle product may have an animal protein content in the range of about 40 percent to about 60 percent by weight. In another embodiment, the animal protein content of the particulate animal muscle product is in the range of about 20 percent to about 40 percent.

About 0% to about 10% of a salt by weight and about 0% to about 6% of buffer(s) by weight may be included in the marinade. In one embodiment, the marinade may include about 2 percent of NaCl by weight (as the salt) and about 1 percent to about 2 percent of the buffer by weight, and the marinade may have a pH in the range of about 10 to about 10.5. In another embodiment, the marinade has a pH of about 9.

Another embodiment of a process for improving water-binding capacity of a substrate animal muscle includes the steps of providing an animal muscle product and applying the animal muscle product to a substrate animal muscle. The animal muscle product is formed by a process including the steps of: providing a slurry of animal muscle and water; increasing the pH of the slurry to an alkaline level sufficient to solubilize at least a portion of the animal protein in the animal muscle so as to form an alkaline slurry; and maintaining the pH of the alkaline slurry at a level sufficient to prevent coagulation of the animal protein. The process forming the animal muscle product may further include the step of drying the alkaline slurry to form a dried animal muscle product. The step of applying may include reconstituting the dried animal muscle product with water, wherein the reconstituted dried animal muscle product is applied to the substrate animal muscle.

Another embodiment of a process for improving water-binding capacity of a substrate animal muscle includes the steps of providing animal muscle; adding an aqueous alkaline solution to the animal muscle to form an alkaline slurry, wherein the pH of the aqueous alkaline solution is sufficiently alkaline to solubilize at least a portion of the animal protein in the animal muscle; maintaining the pH of the alkaline slurry at a level sufficient to prevent coagulation of the animal protein; drying the alkaline slurry to form a substantially dry particulate animal muscle product; reconstituting the particulate animal muscle product to form a marinade; and applying the marinade to a substrate animal muscle.

The alkaline slurry may include animal protein solids in the amount of less than 10 percent by weight of the alkaline slurry, for example. In one embodiment, the alkaline slurry may have an initial pH of about 11, for example, and the step of maintaining the pH of the alkaline slurry may include adjusting the pH of the alkaline slurry to a pH in the range of about 10 to about 10.5 prior to being dried. In another embodiment, the alkaline slurry may have an initial pH of about 10, for example, and the step of maintaining the pH of the alkaline slurry may include maintaining the pH of the alkaline slurry at a pH of about 9 prior to being dried.

In one embodiment, the step of reconstituting the particulate animal muscle product includes adding water, a salt, and a buffer to the particulate animal muscle product, wherein the marinade includes about 2 percent of the salt by weight and about 1 percent to about 2 percent of the buffer by weight, and wherein the marinade has a pH in the range of about 10 to about 10.5.

One embodiment of the present invention provides a process for making a composition for improving water-binding capacity of a substrate animal muscle. The process includes the steps of providing a slurry of animal muscle and water; increasing the pH of the slurry to an alkaline level sufficient to solubilize at least a portion of the animal protein in the animal muscle so as to form an alkaline slurry; and maintaining the pH of the alkaline slurry at a level sufficient to prevent coagulation of the animal protein. In one embodiment, the alkaline slurry may include animal protein solids in the amount of less than 10 percent by weight of the alkaline slurry. In one embodiment, the process may further include drying the alkaline slurry.

In another embodiment, the step of increasing the pH of the slurry may include increasing the pH of the slurry to a pH of about 11 to form the alkaline slurry, and the step of maintaining the pH of the alkaline slurry may include reducing the pH of the alkaline slurry from the pH of about 11 to a final pH in the range of about 10 to about 10.5. In another embodiment, the step of maintaining the pH of the alkaline slurry may include reducing the pH of the alkaline slurry from the pH of about 11 to a final pH of about 9.

In yet another embodiment, the step of increasing the pH of the slurry may include increasing the pH of the slurry to a pH of about 10 to form the alkaline slurry, and the step of maintaining the pH of the alkaline slurry may include maintaining the pH of the alkaline slurry at a pH of about 9.

In any of the aforementioned embodiments, the substrate animal muscle may include fish muscle (e.g., tuna, catfish, etc.), shrimp muscle or other shell seafood muscle, for example. The substrate animal muscle may also include beef, chicken, lamb or pork muscle, for example. The animal muscle forming the slurry may include fish muscle, shrimp muscle, other shell seafood muscle, for example. The animal muscle forming the slurry may also include beef, chicken, lamb or pork muscle, for example. In one embodiment the type of animal muscle used as the substrate animal muscle is the same as the type of animal muscle forming the slurry, therefore providing an identity between the animal muscle of the slurry and the substrate animal muscle.

Further features and advantages of the present invention are described in detail below with reference to the accompanying figures.

### BRIEF DESCRIPTION OF THE FIGURES

The features and advantages of the present invention will become more apparent from the detailed description set forth below when taken in conjunction with the figures.

Fig. 1 is a process flow diagram of an example process for making a particulate muscle product, for improving water-binding capacity of a substrate animal muscle, according to an embodiment of the present invention.

Fig. 2 is exemplary electrophoretic patterns of proteins from an albacore slurry that was prepared using a process in which no dewatering step was employed.

Fig. 3 is exemplary electrophoretic patterns of proteins from a shrimp slurry that was prepared using a process in which no dewatering step was employed.

Fig. 4 is exemplary electrophoretic patterns of proteins from a chicken slurry that was prepared using a process in which no dewatering step was employed.

Fig. 5 is a chart summarizing process settings and results for a production of three samples of muscle slurry described in Example 1.

Fig. 6 illustrates a schematic of a spray pattern change from (a) standard to (b) narrow, due to a plug in a feed line, during a spray drying trial described in Example 2.

Fig. 7(a) is a schematic of a flow/spread pattern of a slurry from a rotary atomizer type nozzle.

Fig. 7(b) is a schematic of a rotating atomizing disk used by a rotary atomizer type nozzle.

Fig. 8 is a chart of marinade formulations for reconstituting particulate product samples of Example 2, in accordance with one embodiment of the present invention.

Figs. 9A-9D are charts summarizing the performance data of the frozen and spray dried samples of Examples 1 and 2, as applied to fish substrates.

Figs. 10A-10C are charts summarizing the performance data of the frozen and spray dried samples of Example 3, as applied to canned shrimp.

Fig. 11 is a chart summarizing the performance data of the frozen and spray dried samples of Example 3, as applied to frozen shrimp.

Fig. 12 is a chart of marinade formulations for the frozen and spray dried samples of Example 3, in accordance with one embodiment of the present invention.

Figs. 13A-13C, 14A-14D, 15A-15C and 16A-16D are charts comparing the macro and micronutrients of albacore, shrimp, chicken, and beef slurries to their respective animal muscle starting materials.

Fig. 17 is a graph of particulate product shelf life performance data provided in Table 5B.

### DETAILED DESCRIPTION

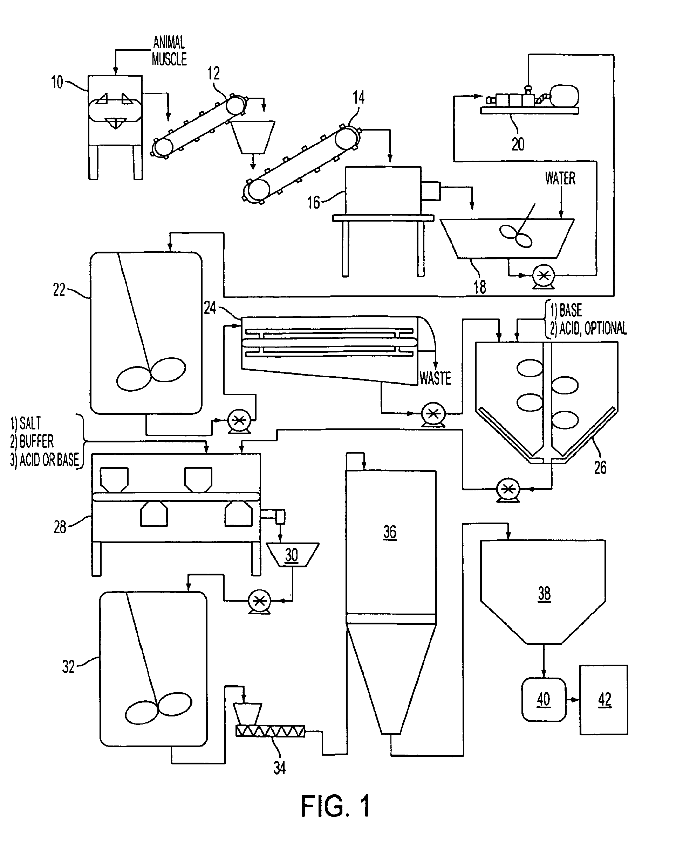

Referring to Fig. 1, a process flow diagram of an exemplary process in which the present invention, in one embodiment, would be implemented, is shown. In particular, meat, also referred to as animal muscle (e.g., fish muscle, free of the head, bones, internal organs and intestines, or shrimp muscle, free of head, legs and skeleton), fresh or frozen, may be processed using the unit operations shown in Fig. 1. Fig. 1 will be described with reference to an example process for frozen albacore tuna and an example process for fresh or frozen shrimp. However, depending on the particular meat type being processed (fresh or frozen), the process settings (including temperature, acid and/or base amounts or types, pH adjustments/titrations, etc.) employed in the unit operations of process presented herein) may be varied from the exemplary process for albacore tuna and shrimp described herein.

In the example process for frozen albacore tuna, frozen albacore muscle (shown in Fig. 1 as "Animal Muscle") that is at a temperature between about -6.67 to -1.11°C (20-30°F) is initially ground in the rotoclaw 10 and then a scaled amount of the meat is conveyed (via conveyors 12,14) to the grinder 16 for further grinding. Once ground into suitably sized particles, the ground meat is mixed with water in a first mix tank 18 to form a slurry. In the exemplary albacore tuna process, the slurry, at a temperature of about 0 to 1.67°C (32-35°F) and pH of about 6.4-6.8 is sent from first mix tank18 to a shear mill for further grinding/mixing or homogenizing, before being pumped to a mix/holding tank 22 at a temperature of about 0 to 3.33°C (32-38°F).

The slurry may then be pumped to a refiner 24 (e.g., a filter, or strainer, such as a Brown refiner) to remove connective tissue and other insolubles of the albacore tuna (e.g., skin and cartilage) or otherwise large particles from the slurry (shown in Fig. 1 as Waste). Connective tissue is preferably removed when the composition is prepared for injection into a substrate animal muscle, as connective tissue may block a needle used for the injection. However, connective tissue need not be removed, particularly when the resulting composition of the process is instead prepared for surface application to a substrate animal muscle.

The refined slurry is then pumped to a second mix tank 26, in which a base is added to raise the pH of the slurry to about 11 to form an alkaline slurry and solubilize at least a portion of the protein in the albacore muscle. The alkaline slurry is maintained at a pH level sufficient to prevent coagulation of the animal protein, i.e., above the isoelectric point at which the solubilized protein would precipitate from solution. Depending on the particular meat type being processed the pH adjustment in second mix tank 26 may be varied. In the exemplary albacore tuna process, after the pH is raised to about 11, an acid is added to reduce the pH of the alkaline slurry to a pH that is above the isoelectric point at which the solubilized protein would precipitate from solution (e.g., reduced to a pH of about 9). The base may be, for example, sodium hydroxide (NaOH), and the acid may be, for example, hydrochloric acid (HCl). The alkaline slurry in second mix tank 26 may be maintained at a temperature of about 1.67 to 5.55°C (35-42°F), for example.

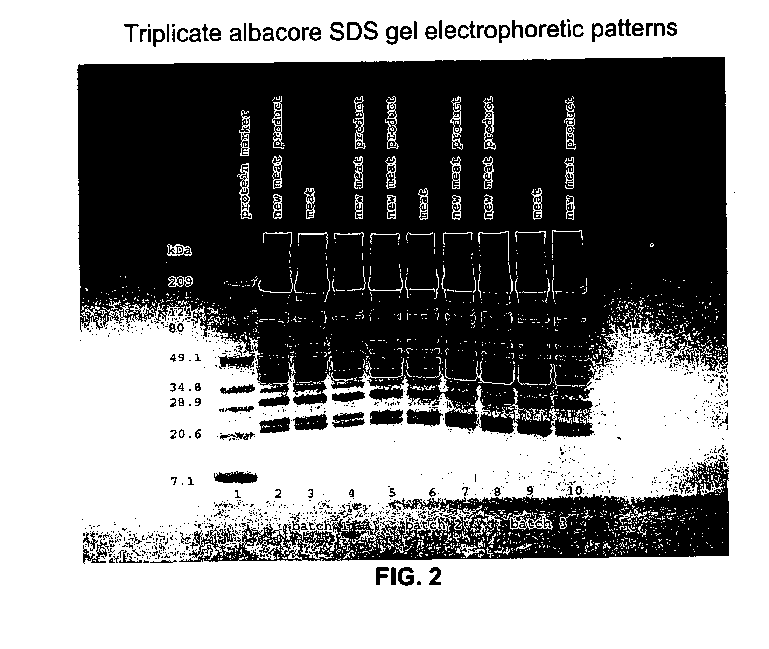

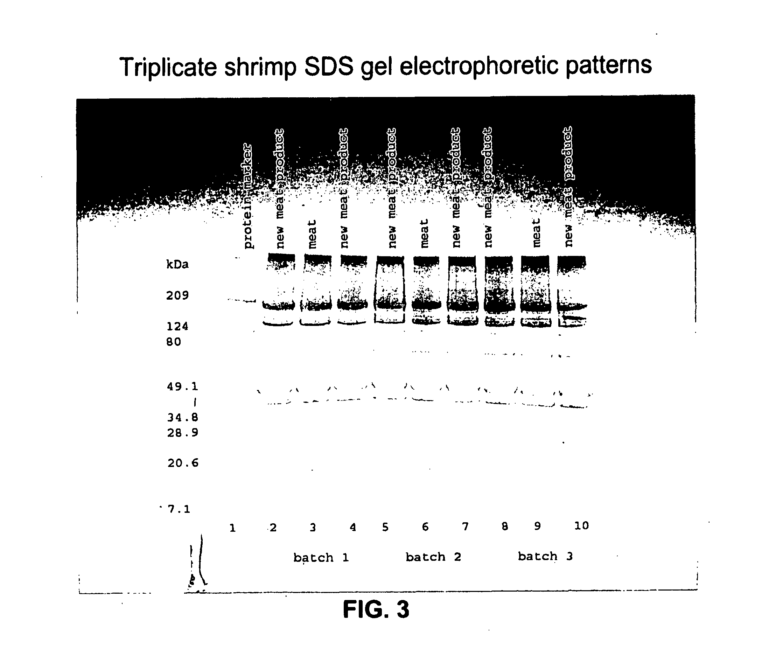

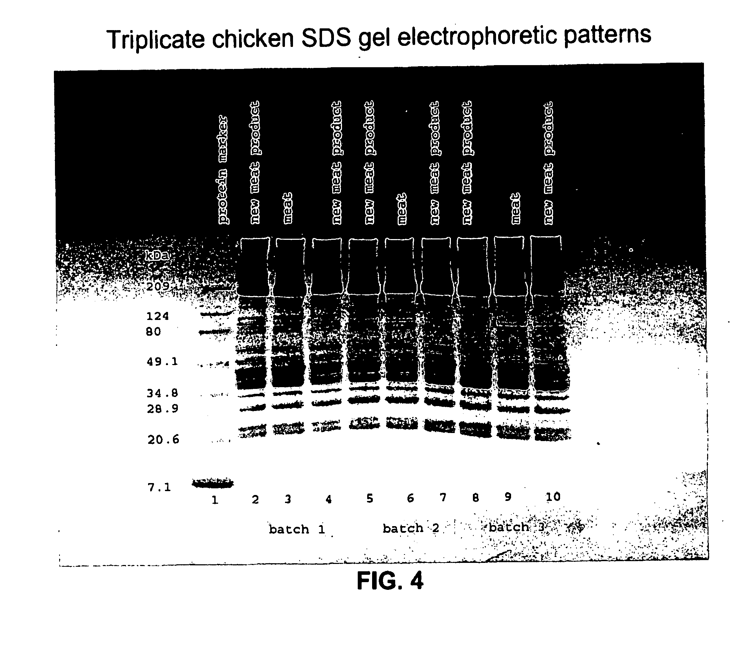

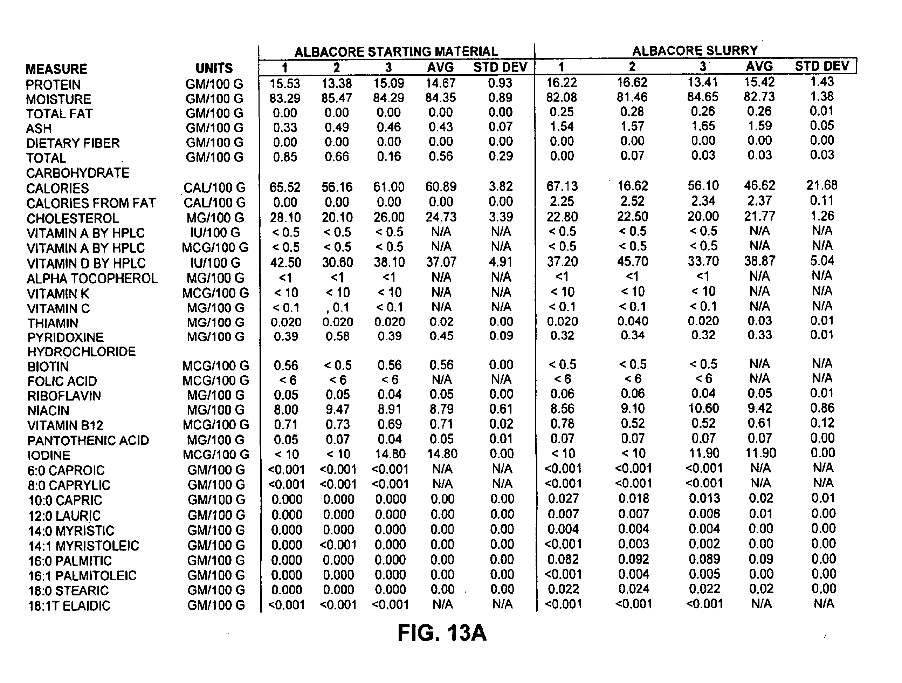

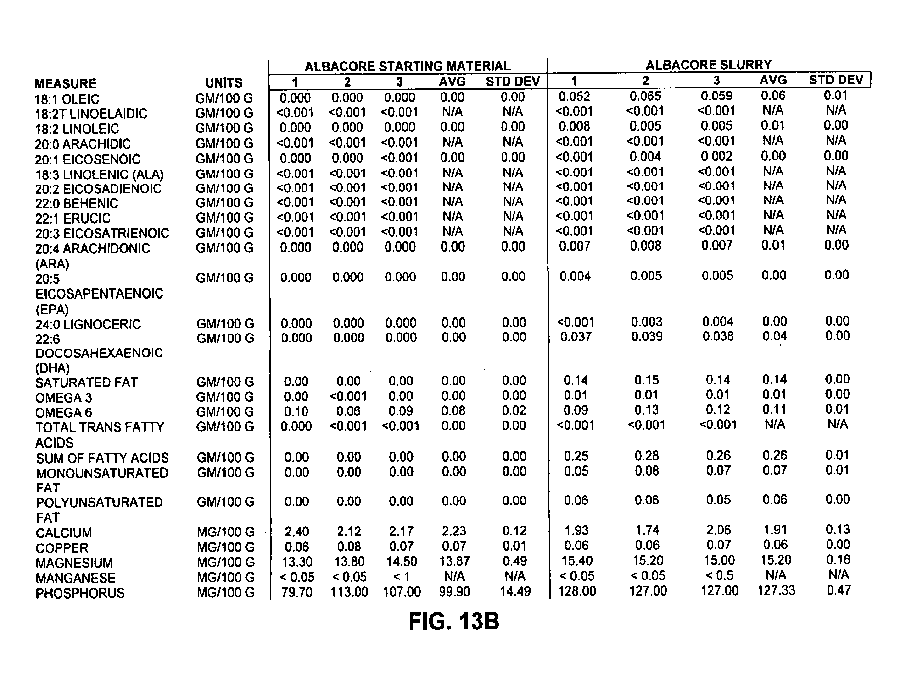

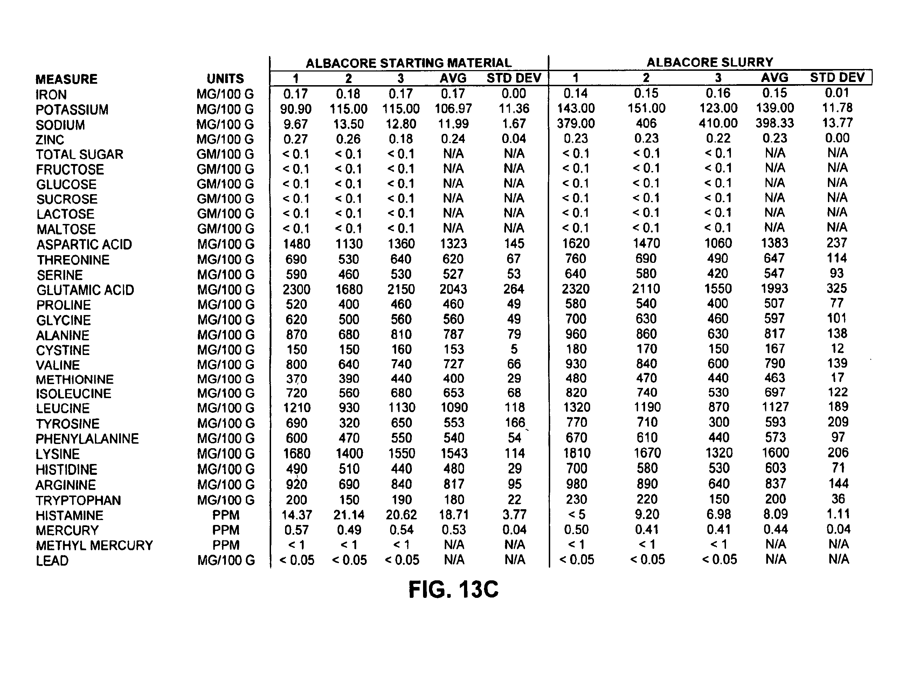

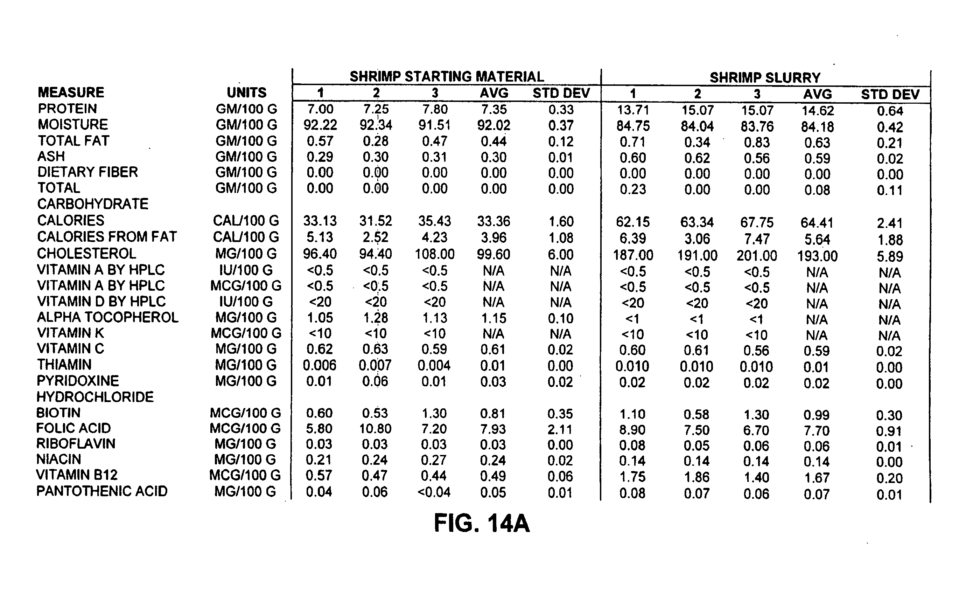

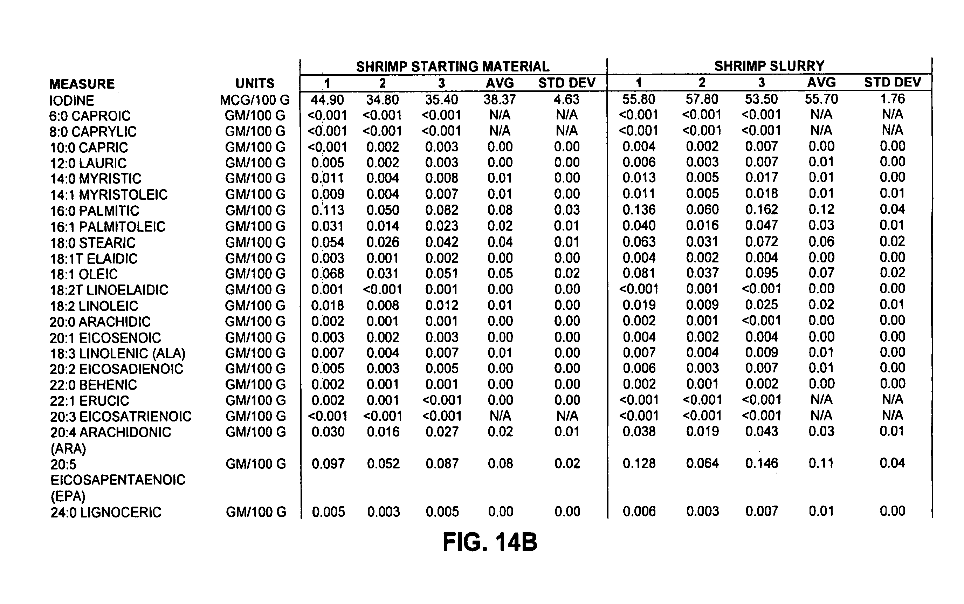

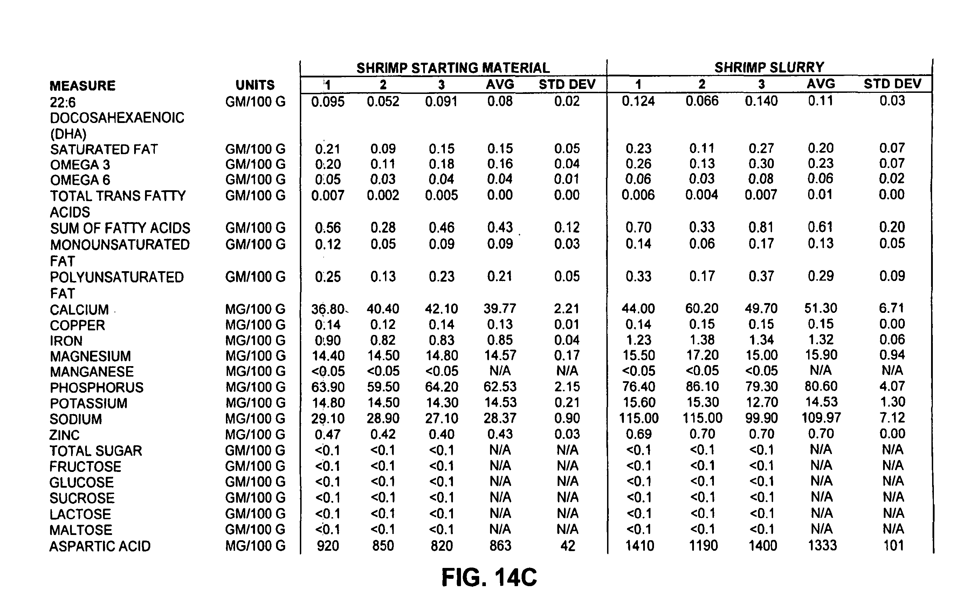

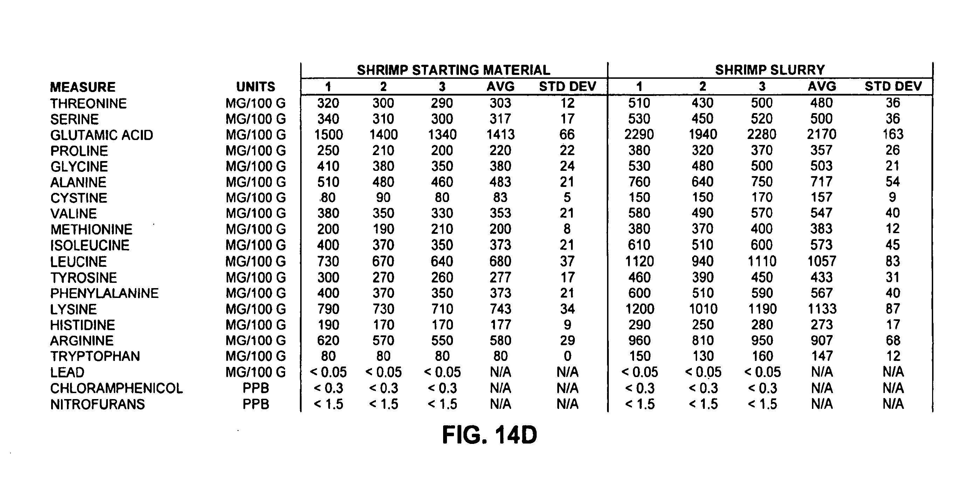

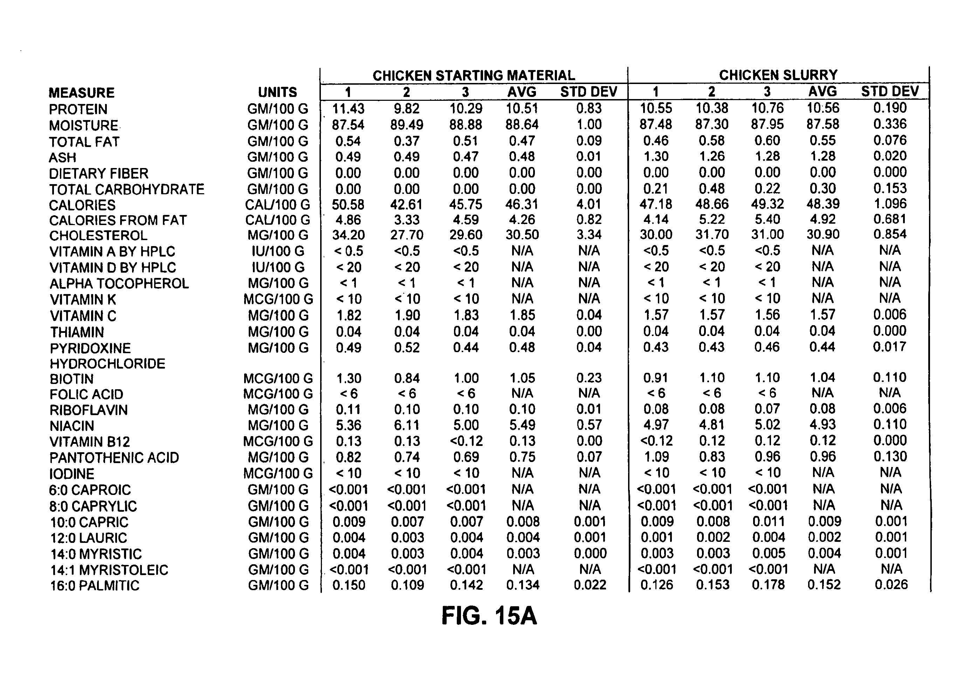

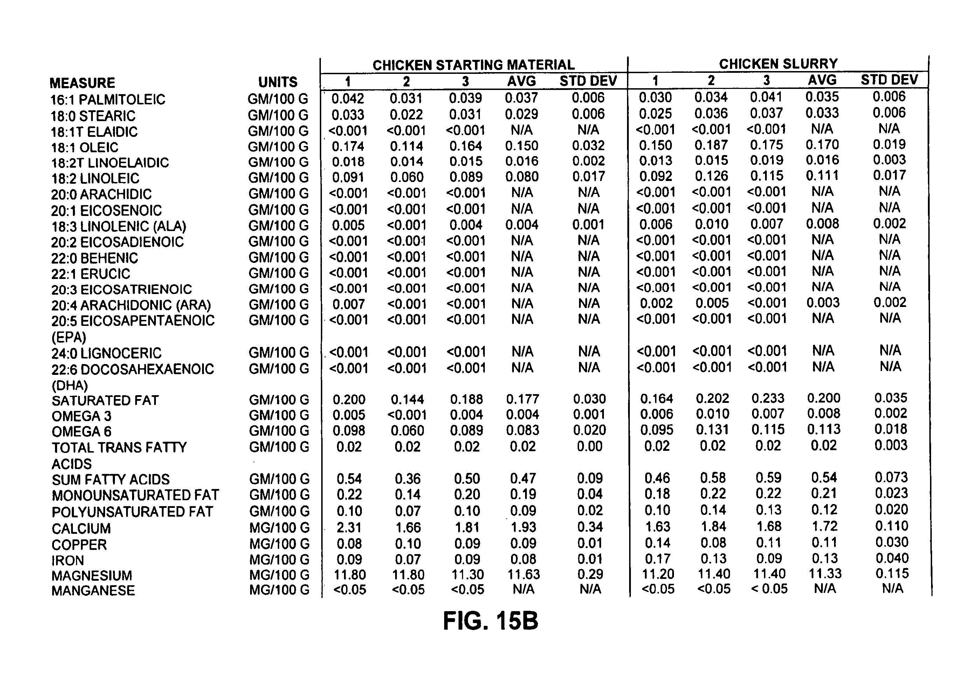

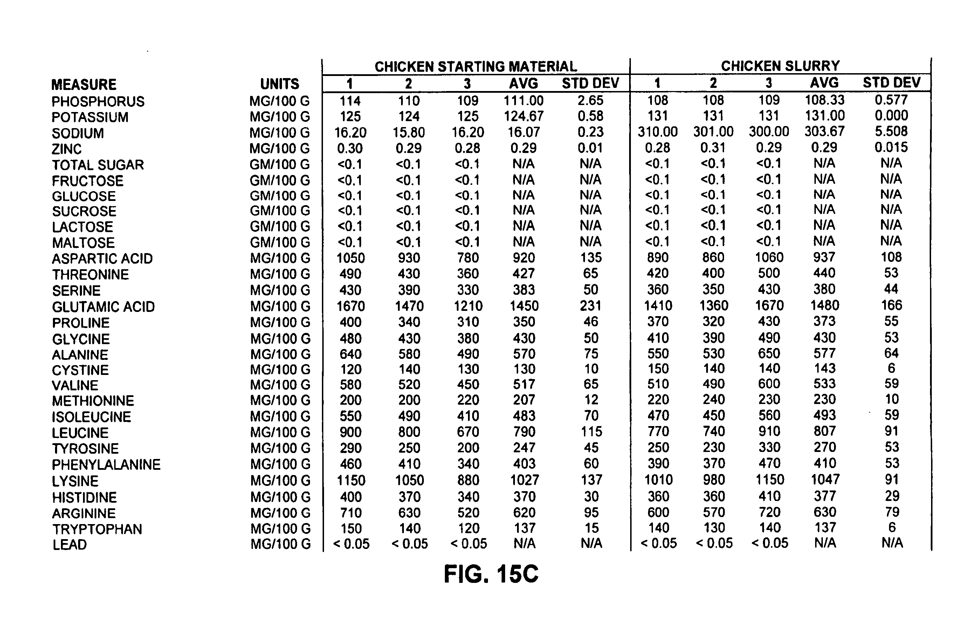

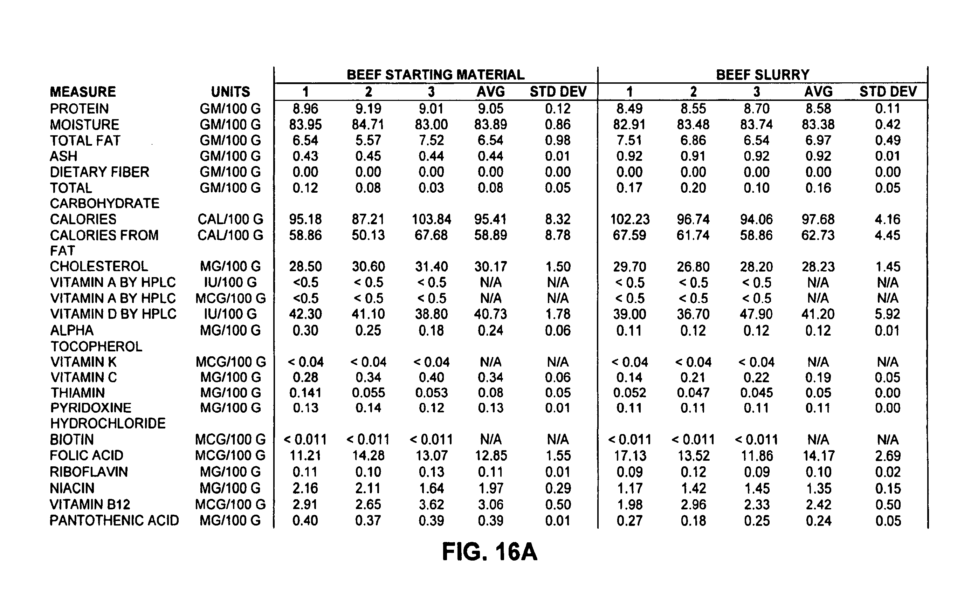

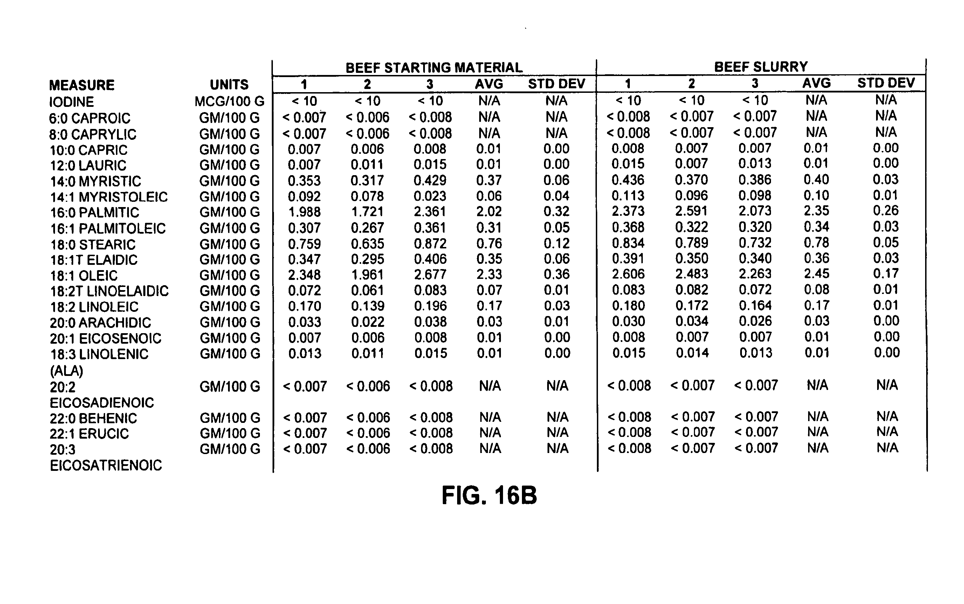

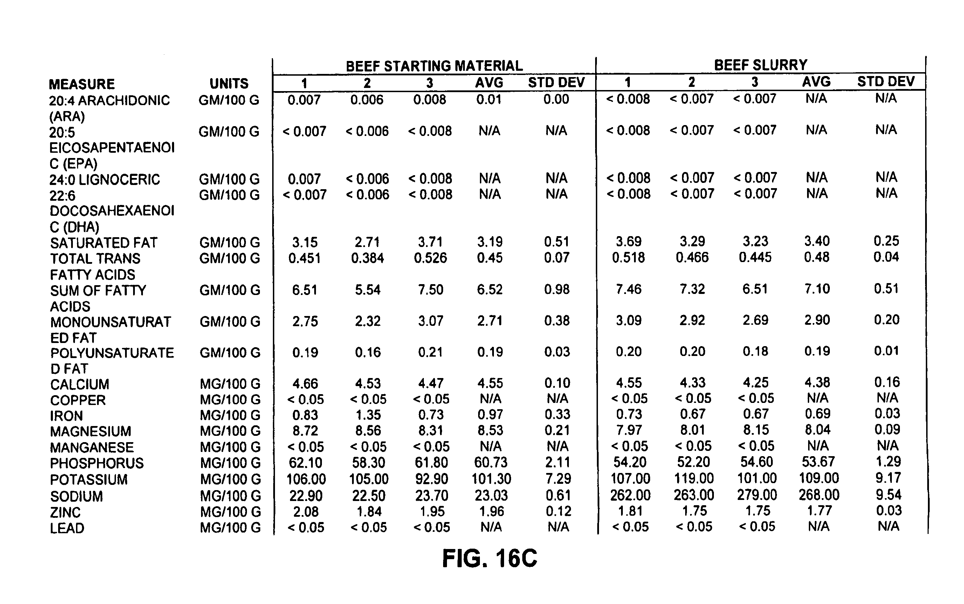

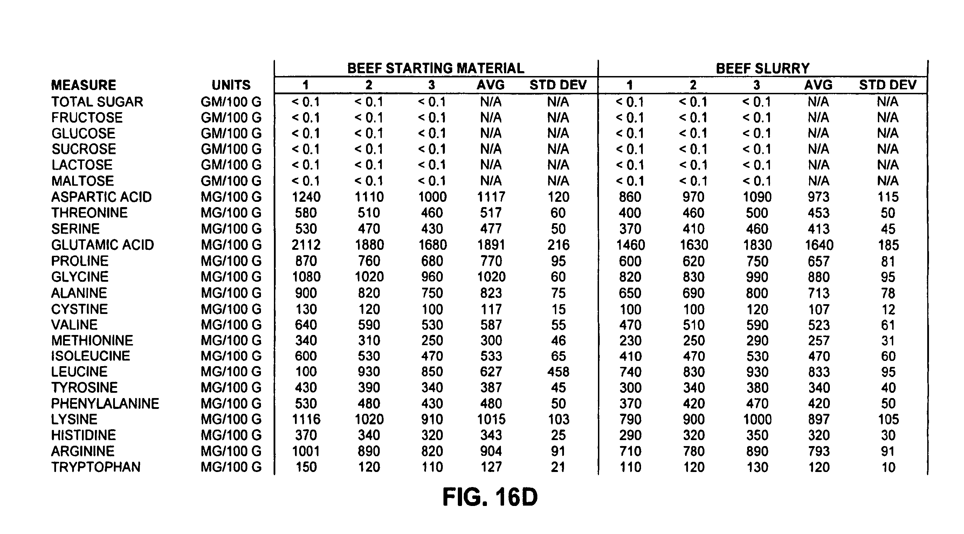

In one embodiment, the alkaline slurry may include protein solids in the amount of less than 10 percent by weight of the alkaline slurry. Moreover, the proteins in a slurry produced using the process of Fig. 1 should typically have a size greater than about 7 kDa. Figs. 2-4 provide exemplary electrophoretic patterns of albacore, shrimp, and chicken slurries that were prepared using the pre-drying unit operations of Fig. 1, with the proteins of the respective slurries coagulated at a pH of 5.5 in second mix tank 26. Figs. 2-4 also include the electrophoretic patterns of each slurry's respective meat starting material (i.e., albacore, shrimp, and chicken meats). Figs. 13A-13C, 14A-14D, and 15A-15C provide macro and micronutrient data for these slurries compared to their respective meat starting materials. Data variance between each slurry and its starting material is either within the margin of error for the measurements or within the variability typically found in the particular meat species. Thus, the nutritional comparisons and the protein profiles show that, with the exception of sodium content, nutritional equivalency essentially exists between each slurry and its respective starting material. Similar results were achieved for a beef slurry prepared, with coagulation of proteins and without a dewatering step, as shown by the nutritional equivalency data provided in Figs. 16A-16D. Slurries prepared using the process of Fig. 1 (with the alkaline slurry being maintained at a pH level sufficient to prevent coagulation of the proteins) should likewise have nutritional equivalency to their starting materials, with electrophoretic patterns similar to those of Figs. 2-4 and nutritional data similar to that of Figs. 13A-13C, 14A-14D, 15A-15C and 16A-16D, thereby allowing for a clean label product.

Rather than being subjected to a dewatering process, as would be conventional for a protein isolate process, the alkaline slurry is pumped to a blender 28, in which buffer(s) and salt are added to the alkaline slurry, at a temperature of about 3.33 to 7.22°C (38-45°F). In blender 28, the pH of the alkaline slurry is adjusted to a final pH of about 10 (e.g., a pH of 10.2 to 10.3), by the addition of a base or an acid, as needed. The type of buffer and the final pH may vary depending on the animal muscle species being processed. For example, the buffer(s) may be a carbonate and/or a bicarbonate. For albacore, in particular, the buffer may be sodium carbonate. The type of salt may also vary. For example, the salt may be NaCl, KCl, CaCl₂, MgCl₂, or C₆H₅Na₃O₇.

The alkaline slurry is then pumped from a hopper 30 to a second mix/holding tank 32 and maintained at a pH of about 10, specifically about a pH of 10.2 to 10.3, at a temperature less than about 10 °C (50°F), prior to being dried. In the embodiment shown, the alkaline slurry is then pumped (e.g., by means of a progressive cavity pump 34) to a spray dryer 36 and is spray dried to form a particulate animal muscle product. The final pH prior to being dried may vary depending on the animal muscle species being processed. For example, in one embodiment, the final pH prior to drying may range from about 6.5 to about 10.5. In particular, the final pH prior to drying may range from about 9.5 to about 10.5 for albacore, skipjack tuna, catfish, and clam slurries; from about 6.5 to 7.5 for chicken slurry; and from about 9 to 10 for shrimp slurry.

The particulate animal muscle product is sent to a holding bin 38 to be packed (at 40) and stored (at 42), at a temperature of about 21.1 °C (70°F), for example, for future application to a substrate animal muscle. In one embodiment, the alkaline slurry is introduced into spray dryer 36 at a temperature of about 200°C and exits spray dryer 36 at a temperature of about 100°C. In general, the drying temperature should be optimized for the animal muscle species being dried, to prevent denaturing of the proteins and the consequent loss of the proteins' ability to assist in water retention of the substrate during cooking. Other methods of drying, other than spray drying, may also be used. For example, drum drying or freeze-drying may be used.

The particulate albacore muscle product of the exemplary frozen albacore tuna process described above may have a moisture content of less than about 10 percent by weight, and a protein content in the range of about 40 percent to about 60 percent by weight, with a preferred protein content being above 50 percent. In one embodiment, the particulate animal muscle product has a moisture content of about 5 percent by weight, with a protein content of about 48.5 percent by weight. Table 1 shows target protein content ranges and preferred protein content (in percent by weight) for particulate animal muscle products formed from albacore tuna, skipjack tuna, chicken, clam, shrimp, and catfish. In the table, the chicken protein range is stated as 60-80% by weight, which is the protein content when essentially only chicken is being dried. If the chicken slurry is mixed with other ingredients (e.g., starch, Reed broth (see Table 11), etc.) prior to drying, then the chicken protein content of the particulate product may be in the range of about 15-25%.

**Table 1**

| **Species** | **Protein Range of Particulate Product** | **Preferred** |
|---|---|---|
| Albacore Tuna | 40-60 | >50 |
| Skipjack Tuna | 40-60 | >50 |
| Chicken | 60-80 | >70 |
| Clam | 10-25 | >17 |
| Shrimp | 25-40 | >30 |
| Catfish | 20-35 | >25 |

A particulate animal muscle product produced using the process of Fig. 1 may then be applied to a substrate animal muscle (e.g., fish muscle, shrimp muscle, etc.) by application to at least a portion of a surface of the substrate, or by injecting the particulate animal muscle into the substrate, for example. The substrate is preferably an uncooked muscle, with the particulate animal muscle product improving the water-binding, or water retention, properties of the substrate during cooking. The particulate animal product may be reconstituted into a liquid form prior to application to the substrate. For example, in one embodiment, water is added to the particulate animal product to form a marinade, which is then applied to the substrate, by injection or surface application. In another embodiment, a salt and buffer, as well as water, are added to the particulate animal product to form a marinade. For example, water, NaCl (as the salt), and a buffer may be added to reconstitute the particulate animal muscle product and form a marinade. In one embodiment, the resulting marinade may include about 2 percent of the salt by weight and between about 1 percent to about 2 percent of the buffer by weight, and the marinade may have a pH in the range of between about 10 and about 10.5.

In one embodiment, no salt and buffers are added in blender 28 prior to drying, which results in a lighter weight particulate animal muscle product, and therefore reduces shipping costs arising from transport of the particulate animal muscle product to a separate facility for application to the substrate animal muscle. However, salt and buffers may facilitate the drying process and therefore, in one embodiment, are added prior to drying.

In contrast to the conventional slurry product applied to a substrate animal muscle, drying of the alkaline slurry may offer a reduction in overall process costs by eliminating the need for refrigerated transportation of the frozen slurry product, eliminating the need for cold storage of the frozen product, and reducing the $/lb protein shipping charges since more protein will fit onto a container. For example, an albacore slurry for shipping may have a content from ~86.5% moisture by weight (~7.5% protein), whereas a particulate albacore product produced in accordance with the present invention may have about ~5% moisture by weight (~53% protein). Moreover, since no dewatering step is employed, in which animal proteins are isolated at the expense of the loss of nutritional constituents not included in the collected isolate, a particulate animal muscle product, or marinade formed therefrom, made in accordance with a process of the present invention, is nutritionally equivalent to that of the source animal product employed in the process.

An example process for processing fresh or frozen shrimp in accordance with one embodiment of the present invention will now be described with reference to the unit operations shown in Fig. 1. In this embodiment, frozen shrimp muscle at a temperature between about -6.7 to -1.1°C (20-30°F) is initially ground in rotoclaw 10 and then a scaled amount is conveyed to grinder 16 for further grinding. Alternatively, fresh shrimp muscle at a temperature between about 1.7 to 7.2°C (35-45°F) may be conveyed directly to a scale hopper and then the scaled amount conveyed to grinder 16 for grinding. The ground shrimp muscle is then mixed with water in first mix tank 18 to form a slurry. The slurry, at a temperature of about 0 to 1.7°C (32-35°F) and pH of about 6.8-7.8 is sent from first mix tank 18 to shear mill 20 for further grinding/mixing or homogenizing, before being pumped to mix/holding tank 22 at a temperature of about 0 to 3.3°C (32-38°F).

The slurry may then be transferred to refiner 24 to remove connective tissue and other insolubles (e.g., pieces of the shrimp's skeleton) or otherwise large particles from the slurry (shown in Fig. 1 as Waste). The refined slurry is then pumped to second mix tank 26, in which a base (e.g., NaOH), is added to raise the pH to a pH of about 10 to solubilize at least a portion of the protein in the shrimp muscle, and the pH is thereafter maintained at a level sufficient to prevent coagulation of the shrimp protein. In one embodiment, the pH of about 10 is maintained in subsequent process steps, with the alkaline slurry having a pH of about 10 just prior to being dried. In another embodiment, the pH of the shrimp alkaline slurry is further decreased from 10 to a final pH of about 9, with the alkaline slurry having a pH of about 9 just prior to being dried. The alkaline slurry in second mix tank 26 is sent to blender 28, in which buffer(s) and salt are added to the alkaline slurry, at a temperature of about 3.3 to 7.2°C (38-45°F). For shrimp, the buffer may be sodium bicarbonate. In blender 28, the pH of the alkaline slurry is maintained at a pH of about 9, by the addition of a base or an acid, as needed.

The alkaline slurry is then pumped to second mix/holding tank 32 prior to being dried. In the embodiment shown, the shrimp alkaline slurry is then spray dried at spray dryer 36 to form a particulate shrimp muscle product, and is then sent to holding bin 38 to be packed and stored, at a temperature of about 70°F, for example, for future application to a substrate animal muscle. The particulate shrimp muscle product may have a moisture content of less than about 10 percent by weight and a protein content in the range of about 20 percent to about 40 percent by weight. In one embodiment, the alkaline slurry is dried to form a particulate shrimp muscle product having a moisture content of about 5 percent by weight, with an animal protein content of about 33 percent by weight.

The following nonlimiting examples will further illustrate the invention. All parts, percentages, ratios, etc. are by weight, unless otherwise indicated. In the figures and charts that correspond to the following examples, "green weight" refers to the weight of the substrate animal muscle samples prior to marinade injection and/or surface application.

### Examples

### Example 1: Albacore Slurry Production for Spray Dryer Trial of Example 2

The objective for this trial was to produce albacore samples at various pH levels for spray dryer testing, described in further detail in Example 2.

Trial Summary:
- Albacore samples at three different pH levels were successfully produced in the pilot plant. Overall yield for this trial on a protein basis was 87.31 %.
- The three albacore samples produced at the different pH levels were processed into slurry with the addition of salt and buffer and then frozen for use as spray dryer feed stock for a spray dry trial described in Example 2.

Trial Details:

**Slurry Production:**

Approximately 54.4kg (120 lbs) of Albacore 0.63cm tuna loins (with ~5-6% red meat attached) were ground in a Hobart through a 0.63cm (1/4") grinder plate. The meat was collected in the recirculation tank and about 108.8kg (240 lbs) of water/ice (9kg: 20 lb of ice) was added. The meat and water mixture was mixed with a lightning mixer and re-circulated through a ball valve for 20 minutes. The backpressure at the ball valve was about 6.20 bar (90 psi). The mixture (pH of 6.75, temperature of 5.7 °C (42.2°F) was then pumped to the Brown refiner to remove the connective tissue and other insolubles. Total weight of material collected from the Brown refiner was 5.3kg (11.8 1bs) at 81.7% moisture (1.8% of total meat solids weight).

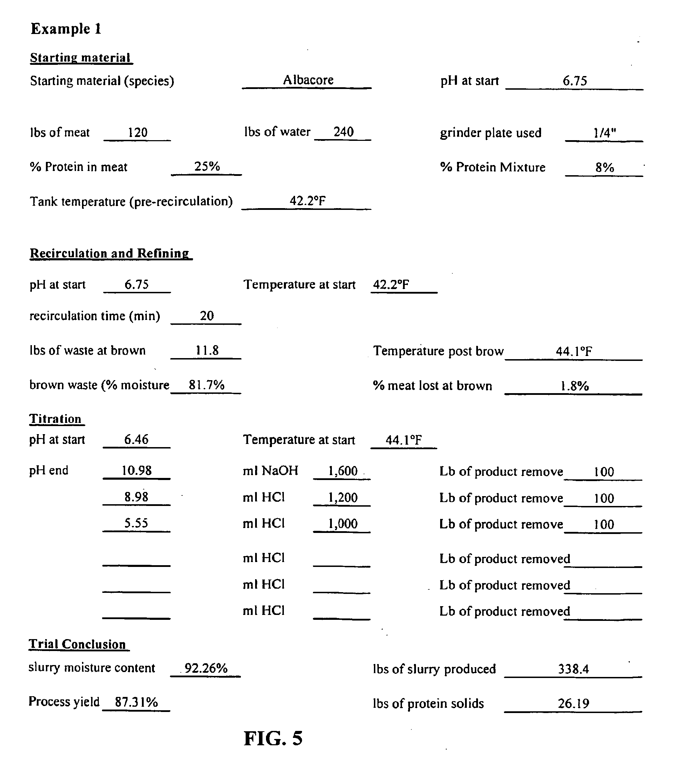

The soluble portion of the mixture, which passed through the Brown refiner, was collected in the pH adjustment tank. The mixture had a starting pH of 6.46 and a starting temperature of -23.3°C (44.1°F). The process settings and results for the production of the three samples at various pH levels (a "11.0 pH Sample", a "9.0 pH Sample", and "5.5 pH Sample"), using the pre-drying unit operations illustrated in Fig. 1, is summarized in Fig. 5. The particular pH adjustments (shown in Fig. 5 as "titrations") for each sample were as follows:
- 11.0 pH Sample : The pH was raised to a pH of about 11 (specifically about a pH of 10.98) with the addition of 1600 mL of 10N NaOH, and a 100 lb sample was collected.
- 9.0 pH Sample: The pH was raised to a pH of about 11 with 10N NaOH and then reduced to a pH of about 9.0 (specifically about a pH of 8.98) with 1200 mL of 6N HCl, and a 100 lb sample was collected.
- 5.5 pH Sample (pH reference sample): The pH was raised to a pH of about 11 with 10N NaOH and then reduced to a pH of about 5.5 (specifically about a pH 5.55) with the addition of 1000 mL of 6N HCl, and a 100 lb sample was collected.

Salt (about 1:1 ratio vs. protein) and sodium carbonate (about 0.3:1 ratio vs. protein) were added to the slurry samples and mixed, so that when later diluted to form a marinade for application to a substrate fish, the marinade would be composed of about 4% protein, 2% salt and 1.2% sodium carbonate. After the addition of the buffers, the pH of all samples was adjusted to 10.2 - 10.3 with either 10N NaOH or 6N HCl. The samples were then transferred to plastic bags and frozen in a -23.3°C (-10°F) freezer for later use as spray dryer feed stock.

Overall, a total of 153.5kg (338.4lb) of tuna slurry at a moisture level of 92.26% was produced. On a protein basis, this trial had a process yield of 87.31%.

Cooking / Cooling:

Substrate tuna meat (i.e., albacore) were injected with a marinade formed from the slurry, with a target pick-up of the marinade being 20% of the fish green weight. To form marinades from the frozen slurry samples with a 4.0 wt% protein in solution, the slurry samples have to be diluted with water. For example, for 106.2 lbs of a slurry sample, typically having 86.9% moisture, 13.9 lbs TS (Total Solids) and 7.7 lbs protein, about 87.3 lbs of water would need to be added to form a marinade (total weight 193.5 lbs) with 4.0 wt% protein in solution. The injected fish and one control (non-injected) fish were cooked (i.e., "pre-cooked") in a steam oven until an internal temperature of ~59.0°C was reached. Total cook time was 150 minutes. After cooking, the samples were cooled with a cool water spray and then placed in a cooler for ~90 minutes to halt the cooking process. Post cooling, the samples were weighed to determine pre-cook loss.

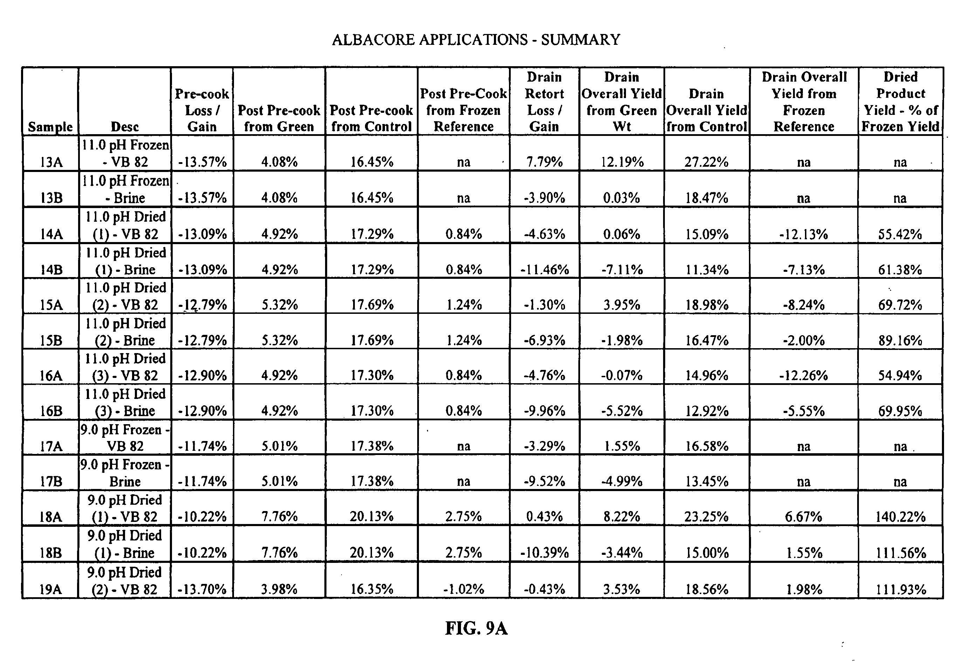

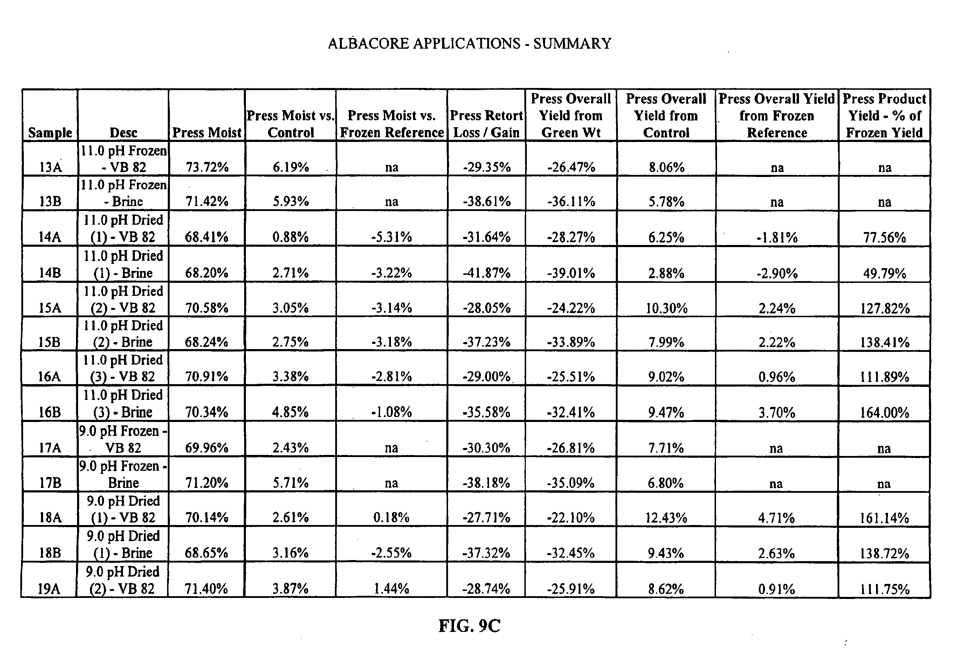

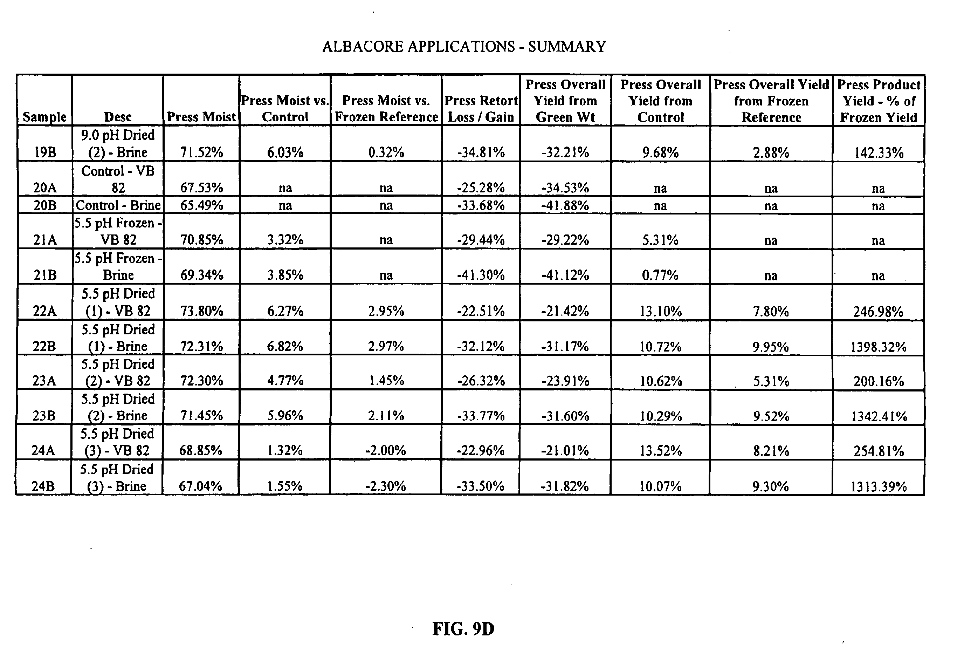

There was a noticeable difference in appearance when comparing the control fish to the injected fish. The control fish looked noticeably drier both before and after cutting. FIGs. 9A-9D shows performance data of the samples applied with a marinade prepared from frozen slurry, in comparison with samples applied with a marinade prepared from reconstituted particulate albacore muscle product prepared from the slurry, which is further described in Example 2.

### Example 2: Albacore Spray Drying Trial

The objective of this trial was to spray dry the albacore slurry that was produced in the trial described in Example 1. Three different samples, or feed stock grades, which correspond to the 11.0 pH sample, 9.0 pH sample, and the 5.5 pH sample slurries described above in Example 1, were spray dried to form samples of a particulate albacore muscle product and compared to the corresponding frozen slurry samples for reference. Process settings and results for spray dry runs of each feed stock sample are provided in Tables 2A and 2B, wherein the 9.0 pH sample corresponds to "Feed Number 1", the 11.0 pH sample corresponds to "Feed Number 2" and the 5.5 pH sample corresponds to "Feed Number 3". Exemplary data on particle size and particle size distribution of a particulate product produced in this trial is provided in Table 3, wherein a 11.0 pH sample spray dried in Run 6 of Table 2B is shown.

| **Table 2A** | | | | | |
|---|---|---|---|---|---|
| **Run** | **1** | **2** | **3** | **4** | **5** |
| Feed Number | 1 | 1 | 1 | 2 | 2 |
| % Solids (1) | 11.02% | 11.02% | 11.02% | 11.17% | 11.17% |
| | | | | | |
| **Drying Conditions** | | | | | |
| Atomization Method | Two-Fluid Nozzle-Schlick (1.3mm) | Vaned Rotary Wheel - (SL24-50) | | | |
| atomizer Speed (RPM) | - | 30,000 | 30,000 | 30,000 | 30,000 |
| atomizer pressure (bar) | - | - | - | - | - |
| atomizing gas flow % | 90 | - | - | - | - |
| atomizing gas pressure (bar) | 2.0 | - | - | - | - |
| atomizing gas flow reading (kg air/hr) | 13.3 | - | - | - | - |
| Inlet Temperature, °C | 200 | 200 | 200 | 197 | 199 |
| Outlet Temperature, °C | 90 | 90 | 95 | 96 | 100 |
| Feed Temperature, °F | 49 | 54 | 57 | 34 | 38 |
| Feed Rate (solids), kg/hr | 3.19 | 2.87 | 2.10 | 2.90 | 2.40 |
| Feed Rate (overall), kg/hr | 28.98 | 26.08 | 19.02 | 25.98 | 21.48 |
| Run Time (hr minutes) | 0:17 | 0:30 | 0:32 | 0:31 | 0:30 |
| | | | | | |
| **Product** | | | | | |
| Kilograms Produced | - | 34 | .68 | 45 | .68 |
| % overall recovery w/BD | - | 23.67% | 60.87% | 30.25% | 56.72% |
| Residual Moisture (%) (2) | 4.44% | 6.81% | 6.44% | 5.41% | 3.66% |
| Particle Size Distribution (3) | | | | | |
| D 10 (10 wt % smaller than) | 12.15 | 12.15 | 18.14 | 15.23 | 16.55 |
| D 50 (50 wt % smaller than) | 22.09 | 22.10 | 33.29 | 28.71 | 31.52 |
| D 90 (90 wt % smaller than) | 43.21 | 43.21 | 59.36 | 57.79 | 59.29 |
| | | | | | |
| Bulk Density, grams/cm³ | 0.357 | 0.283 | 0.290 | 0.277 | 0.279 |
| Tapped Density, grams/cm³ | 0.467 | 03.93 | 0.391 | 0.325 | 0.366 |
| | | | | | |
| **Brush Down (BD)** (4) | | | | | |
| Kilograms Produced | - | - | 1.59 | - | - |
| % overall recovery w/BD | - | - | 75.39% | - | - |
| Residual Moisture (%) (2) | - | - | 14.18% | - | - |
| Particle Size Distribution (3) | | | | | |
| D 10 (10 wt % smaller than) | - | - | 31.39 | - | - |
| D 50 (50 wt % smaller than) | - | - | 70.28 | - | - |
| D 90 (90 wt % smaller than) | - | - | 136.32 | - | - |
| Bulk Density, grams/cm³ | - | - | 0.307 | - | - |
| Tapped Density, grams/cm³ | - | - | 0.380 | - | - |

| **Table 2B** | | | | | | | |
|---|---|---|---|---|---|---|---|
| **Run** | **6** | **7** | **8** | **9** | **10** | **11** | **All Runs** |
| Feed Number | 2 | 2 | 3 | 3 | 3 | 3 | |
| % Solids (1) | 11.17% | 11.17% | 12.35% | 12.35% | 12.35% | 12.35% | |
| | | | | | | | |
| **Drying Conditions** | | | | | | | |
| Atomization Method | Vaned Rotary Wheel - (SL24-50) | | | | | | |
| atomizer Speed (RPM) | 30,000 | 30,000 | 30,000 | 30,000 | 30,000 | 30,000 | 30,000 |
| atomizer pressure (bar) | - | - | - | - | - | - | - |
| atomizing gas flow % | - | - | - | - | - | - | - |
| atomizing gas pressure (bar) | - | - | - | - | - | - | - |
| atomizing gas flow reading (kg air/hr) | - | - | - | - | - | - | - |
| Inlet Temperature, °C | 199 | 200 | 201 | 199 | 200 | 201 | - |
| Outlet Temperature, °C | 105 | 100 | 95 | 100 | 105 | 102 | - |
| Feed Temperature, °F | 43 | - | 25 | - | 33 | 25 | - |
| Feed Rate (solids), kg/hr | 2.14 | 1.9 | 2.27 | 2.23 | 1.93 | 2.13 | - |
| Feed Rate (overall), kg/hr | 19.18 | 17.01 | 18.36 | 18.07 | 15.60 | 17.24 | - |
| Run Time (hr minutes) | 0:35 | 0:30 | 0:36 | 0:35 | 0:35 | 0:25 | - |
| | | | | | | | |
| **Product** | | | | | | | |
| Kilograms Produced | 0.91 | 1.25 | 0.79 | 0.91 | 1.70 | 0.57 | - |
| % overall recovery w/BD | 72.60% | 131.34% | 58.34% | 69.71% | 151.34% | 63.90% | - |
| Residual Moisture (%) (2) | 3.94% | 2.11% | 3.98% | 8.05% | 8.05% | 8.05% | - |
| Particle Size Distribution (3) | | | | | | | |
| D 10 (10 wt % smaller than) | 19.29 | 22.97 | 14.58 | 21.20 | 21.20 | 21.20 | - |
| D 50 (50 wt % smaller than) | 37.12 | 46.54 | 27.30 | 70.74 | 70.74 | 70.74 | - |
| D 90 (90 wt % smaller than) | 72.56 | 92.23 | 54.93 | 149.31 | 149.31 | 149.31 | - |
| | | | | | | | |
| Bulk Density, grams/cm³ | 0.297 | 0.304 | 0.351 | 0.046 | 0.046 | 0.046 | - |
| Tapped Density, grams/cm³ | 0.379 | 0.390 | 0.447 | 0.069 | 0.069 | 0.069 | - |
| | | | | | | | |
| **Brush Down (BD)** | | | | | | | |
| Kilograms Produced | - | 1.81 | - | - | - | 1.36 | - |
| % overall recovery w/BD | - | 136.79% | - | - | - | 114.05% | 100.07 % |
| Residual Moisture (%) (2) | - | 2.25% | - | - | - | 1.88% | - |
| Particle Size Distribution (3) | | | | | | | |
| D 10 (10 wt % smaller than) | - | 27.80 | - | - | - | 25.02 | - |
| D50 (50 wt % smaller than) | - | 61.00 | - | - | - | 56.55 | - |
| D 90 (90 wt % smaller than) | - | 143.17 | - | - | - | 143.36 | - |
| | | | | | | | |
| Bulk Density, grams/cm³ | - | 0.315 | - | - | - | 0.378 | - |
| Tapped Density, grams/cm³ | - | 0.382 | - | - | - | 0.483 | - |

| | | | | | | | |
|---|---|---|---|---|---|---|---|
| (1) Mettier Moisture Balance at 105 Deg C for 30 minutes, 3 gram sample of the feed (2) Mettier Moisture Balance at 105 Deg C for 10 minutes, 2 gram sample of the feed (3) Horiba LA-910 Laser Scattering Particle Size Analyzer (4) The brush down from run 3 was collection from runs 1-3, run 7 was a collection from runs 4-7 and run 11 was the collection from runs 8-11 | | | | | | | |

**Table 3**

| **Particle Size Measurement Data - Run 6** | | | | |
|---|---|---|---|---|
| Medium | Mode | C.V. | S.D. | Mean |
| 37.124 µm | 32.196 µm | 52.89% | 22.369 µm | 42.334 µm |

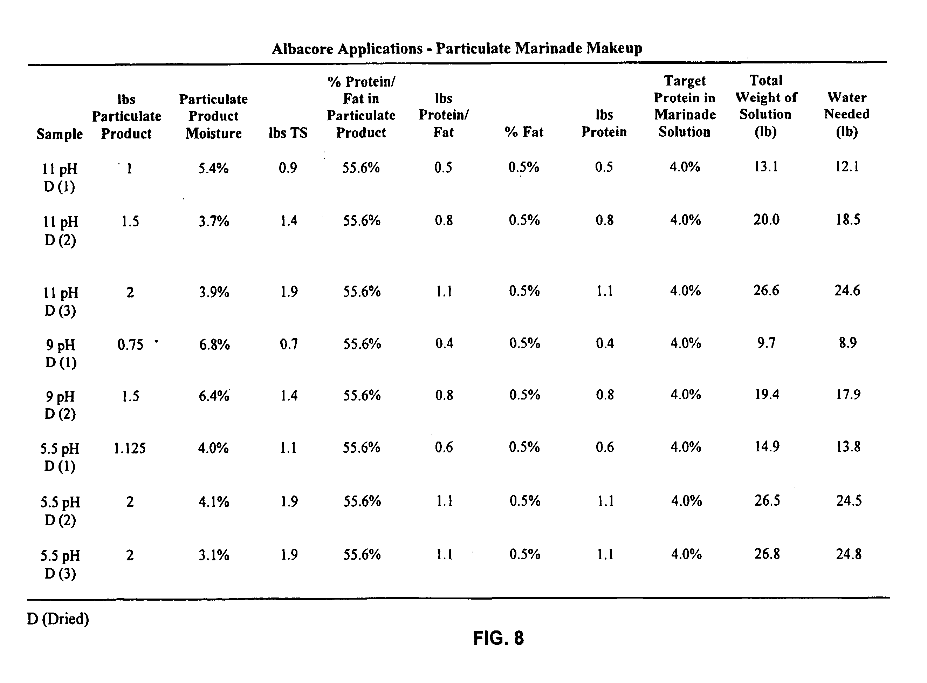

All samples were reconstituted to form a marinade and injected into ½ albacore fish (at a target pick-up of 20%), cooked, cleaned and canned, and weighed. A control (non-injected) fish was also included in the performance testing. A chart of the amount of water (lbs) need to reconstitute the particulate product samples to achieve a marinade with 4.0 wt% protein in solution is provided in Fig. 8 (1lb = 0.454kg).

Injected fish and control fish samples were canned with either broth ("VB 82") or brine, using the formulations provided in Table 4. In the table, VB 82 refers to a vegetable broth (soy protein based) manufactured by Solae LLC of St. Louis, MO, and SAPP refers to sodium acid pyrophosphate. The fill used for each 6 oz can was 3.85 oz meat, 1.2 oz brine/brine and 0.95 oz water (1oz = 28.35g).

**Table 4: Albacore Applications - Broth and Brine Makeup**

| | **"VB 82" Broth** | **Brine** |
|---|---|---|
| **Water** | 88.19% | 96.05% |
| **VB 82** | 7.86% | 0.00% |
| **Salt** | 3.61% | 3.61% |
| **SAPP** | 0.34% | 0.34% |

Yield was measured to determine if there were functional differences between the frozen and spray dried samples. An improved yield is a measure of an improved water-binding capacity of the substrate. A summary of the performance data (e.g., pre-cook loss, retort loss, yields, press moisture, and press yields) of the frozen and spray dried samples as applied to the fish substrate samples is provided in the charts of Figs. 9A-9D. The pH of the fish substrate samples post retort and draining ranged from about 6 to 7 pH (specifically, from 6.27 pH to 7.03 pH). The performance data of the frozen and spray dried samples show that the dried particulate albacore muscle product had similar or in some cases improved functionality over the corresponding frozen slurry reference samples.

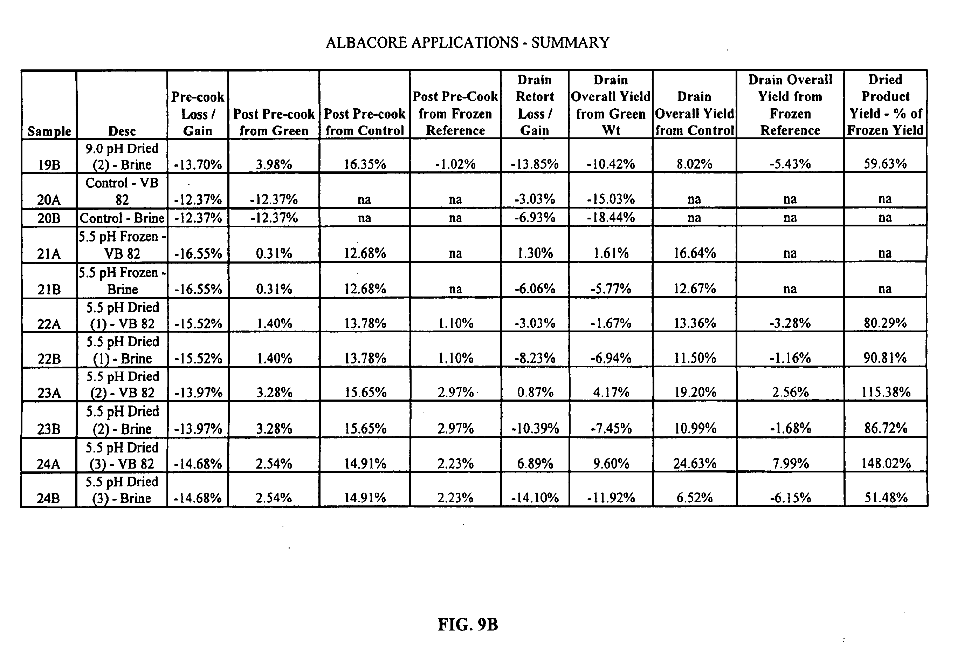

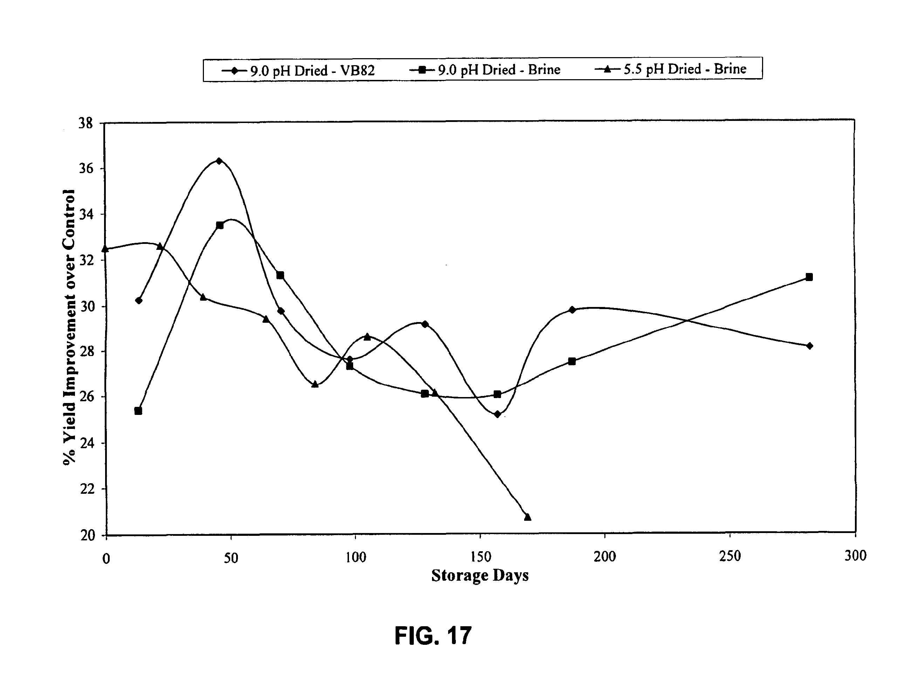

As shown in Tables 5A and 5B, and in Fig. 17, the shelf life of the 9.0 pH Sample of the particulate albacore muscle product was also evaluated and compared to the shelf life of the 5.5 pH Sample of the particulate albacore muscle product. In particular, to obtain the performance data in Table 5A, the 9.0 pH Sample particulate product (about 48.9 wt% protein) was stored for about 8 months and then reconstituted to form a marinade (about 4.0 wt% protein). The marinade was injected into an albacore fish substrate having a green weight of approximately 11.8kg 26 lbs) (at a target pick-up of 20%). The injected fish was cooked, cleaned and canned with either "VB 82" broth (see sample "9.0 pH Dried - VB 82" of Table 5A) or brine (see sample "9.0 pH Dried - Brine"), and weighed. A control (non-injected) fish canned in either "VB 82" broth (see sample "Control - VB 82") or brine (see sample "Control - Brine") was also included in the performance testing. The data of Table 5A shows that the post-storage 9.0 pH Sample particulate product maintained a shelf life, as its marinade still showed improved performance over the control. Further, as compared to the performance testing of the pre-storage 9.0 pH Sample particulate product (see Samples 18A-B and 19A-B of Figs. 9A and 9B), the post-storage 9.0 pH Sample had comparable and in some cases improved performance over the pre-storage 9.0 pH Sample.

The performance of the 9.0 pH Sample and the 5.5 pH Sample particulate products were also evaluated after various time periods of storage. Similar to the test method for generating the data of Table 5A, the respective particulate products were reconstituted into a marinade and injected into fish that were cooked, cleaned and canned. The results of this evaluation are shown in Table 5B and the corresponding graph of Fig. 17, which shows the percent yield improvement over the control (non-injected) fish yield. In the table and figure , "storage days" refers to the number of days since manufacture that the particulate product was stored before its performance testing. The data shows that the marinades of the 9.0 pH Sample, whether injected into fish that were canned in VB 82 (see sample "9.0 pH Dried - VB 82") or brine (see sample "9.0 pH Dried - Brine"), most often performed better over the evaluated time period than the marinade of the 5.5 pH Sample, which was injected into fish canned in brine (see sample "5.5 pH Dried - Brine"). Significantly, the marinade of the 9.0 pH Sample had a 27% improvement over control after 187 storage days, whereas the marinade of the 5.5 pH Sample declined to about 20% improvement over control after 169 storage days. The marinade of the 9.0 pH Sample continued to perform after 282 storage days with an improvement over control of 28% (sample "9.0 pH Dried - VB 82") and about 31% (sample "9.0 pH Dried - Brine").

**Table 5A: Albacore Applications - Particulate Product Shelf Life Data**

| **Sample** | **Post Precook from Green** | **Post Precook from Control** | **Drain Overall Yield from Green Wt** | **Drain Overall Yield from Control** |
|---|---|---|---|---|
| 9.0 pH Dried - VB 82 | | | | |
| | 0.31% | 16.15% | 5.49% | 18.37% |
| Control - VB 82 | | | | |
| | -15.84% | na | -12.88% | na |
| 9.0 pH Dried - Brine | | | | |
| | 0.31% | 16.15% | -7.93% | 12.85% |
| Control - Brine | -15.84% | na | -20.78% | na |

**Table 5B: Albacore Applications - Particulate Product Shelf Life Data**

| | % Yield Improvement Over Control | | |
|---|---|---|---|
| **Storage Days** | **9.0 pH Dried - VB 82** | **9.0 pH Dried - Brine** | **5.5 pH Dried - Brine** |
| 0 | | | 32.5 |
| 13 | 30.25 | 25.35 | |
| 22 | | | 32.6 |
| 39 | | | 30.4 |
| 46 | 36.3 | 33.5 | |
| 64 | | | 29.4 |
| 70 | 29.75 | 31.3 | |
| 84 | | | 26.5 |
| 98 | 27.6 | 27.3 | |
| 105 | | | 28.6 |
| 128 | 29.15 | 26.05 | |
| 132 | | | 26.1 |
| 157 | 25.15 | 26 | |
| 169 | | | 20.7 |
| 187 | 29.75 | 27.45 | |
| 282 | 28.1 | 31.15 | |

Spray Dry Trial Summary:
- Albacore samples that were produced at three different pH levels, as described in Example 1, were spray dried.
- For each feed stock grade, 2-4 samples were collected at different moisture levels to help determine the moisture range.
- Issues were initially encountered when there was an attempt to spray the feed stock using a two fluid nozzle (intermittent flow and pressure). The two fluid nozzle was then replaced with a rotary atomizer. The intermittent flow issues were no longer encountered once the change was made.
- If dispersability is an issue with the dried material, a potential agglomeration unit operation may be employed.

Trial Details:

**Spray Drying - 9.0 pH Sample**

Approximately 27.2kg (60 lbs) of the 9.0 pH sample feed stock grade were added to a contained and sheared using a Cowles mixer to reconstitute the frozen material. This slurry was then added to the dryer feed tank. Due to the high viscosity of this sample, about 10 lbs of water was added to help thin the slurry and then mixed into the sample with a lightning mixer. It was observed that the slurry still had small pieces of frozen material even after the addition of the water. Warm water was run through the jacket of the feed tank until no frozen material was observed. During this process the temperature was raised from about -2.2°C (28°F) to about 8.9°C (48°F). The material was then fed to the dryer and passed through a 2 fluid (slurry and compressed air) nozzle that was fed into the top of the dryer. The nozzle outlet was 1.3 mm. The dryer being used was a tall form type spray dryer with one nozzle, one cyclone and one baghouse. The product was collected from the cyclone. The inlet and exhaust temperatures were about 200°C and about 90°C, respectively.

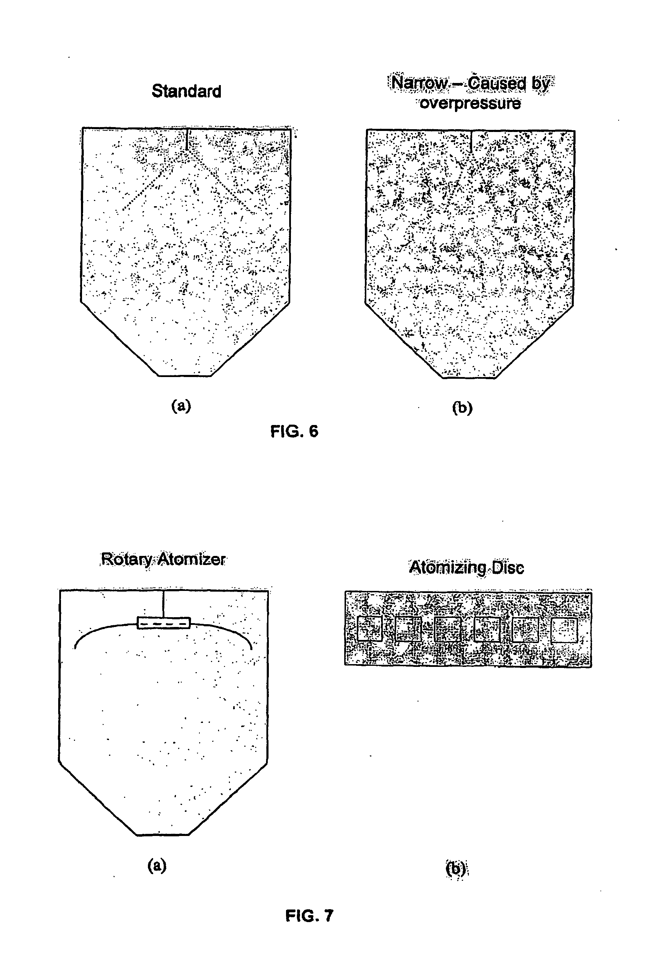

Approximately 15 minutes after feeding slurry to the dryer, a fluctuation in the feed pump pressure and exhaust temperature was observed, indicating a potential plug of the feed line and/or inconsistent feed. The dryer was shut down and there were signs of wet material at the bottom of the dryer cone. The wet material was believed to be the result of the fluctuations and may be related to the high viscosity of the material. The high viscosity material may have caused an over pressure of the feed line due to a plug. Once the plug worked through the nozzle, and larger than standard amount of slurry passed through the nozzle due to the high pressure, the spray pattern was disrupted. This disruption projected the slurry toward the dryer cone too quickly, not allowing for the material to atomize (and thus not dry prior to contacting the bottom of the dryer). Fig. 6 illustrates a schematic of the spray pattern change from (a) standard to (b) narrow, due to a plug in the feed line.

Prior to the issues with the fluctuation, some of the slurry was successfully dried to a fine powder. In an attempt to improve the process and eliminate the fluctuations, the nozzle was switched to a rotary atomizer type nozzle, which is typically used for higher viscosity products. A schematic of a flow/spread pattern of the slurry from a rotary atomizer type nozzle is illustrated in Fig. 7(a). This type nozzle uses a rotating disk rotating at high speeds that spreads the slurry throughout the top of the dryer. The disk used had 27 square holes that were about 0.63 to 0.32 (1/4" x 1/8"). A schematic of the rotating atomizing disk is illustrated in Fig. 7(b).

It was observed that the slurry feed flow rate and pressure was consistent and stable throughout the entire trial after the initial fluctuation issues. Two samples were taken during this trial, at 30 min and 60 min. The 30 min trial used 200°C inlet temp and 90°C exhaust temp. When this sample was collected, it appeared stickier / wetter than desired as the product did not flow well. The moisture was measured to be about 6.8% and outside a target moisture range of about 3.0 - 5.5%. To reduce the moisture, the exhaust temperature was increased to 95°C. The resulting product moisture was about 6.2%. Both product samples taken were collected for later injection into ½ fish.

After the trial was completed the drier was inspected for wet material. The dryer cone and walls had a small buildup of dry material throughout (typical of spray drying) and a small layer of wetter material at a level where the atomizer spread the material (considered common when using a rotary atomizer on a small dryer due to the small diameter of 1.23m (4 ft) of the body). When scaled up to a production dryer (8 ft =2.46m or larger) this wet layer should no longer be observed. This wet material did not affect the dry material collected during this trial.

The next two samples (11.0 pH and 5.5 pH) were produced at three different exhaust temperatures (95°C, 100°C, and 105°C) to explore production of a product within the target moisture range while still minimizing potential heat denaturization of the protein.

**Spray Drying - 11.0 pH Sample**

The dryer was started with the rotary atomizing disc in place. It was observed that the slurry feed flow rate and pressure was consistent and stable throughout the entire trial. Four samples were taken during this trial, at 30 min, 60 min, 90 min and all remaining feed. The 30 min trial used 200°C inlet temp and 95°C exhaust temp. The 60 min trial used 200°C inlet temp and 100°C exhaust temp. The 90 min trial used 200°C inlet and 105°C exhaust. After the three samples at different exhaust temperatures were taken, the dryer conditions were changed to 200°C inlet and 100°C exhaust, where it was believed the dryer was operating at the high end of the moisture target (about 5% moisture).

After the trial was completed the drier was inspected for wet material. The dryer cone and walls had a small buildup of dry material throughout and a small layer of wetter material at a level where the atomizer spread the material. This wet material did not affect the dry material collected during this trial.

**Spray Drying - 5.5 pH Sample**

The dryer was started with the rotary atomizing disc in place. It was observed that the slurry feed flow rate and pressure was consistent and stable throughout the entire trial. Four samples were taken during this trial, at 30 min, 60 min, 90 min and all remaining feed. The 30 min trial used 200°C inlet temp and 95°C exhaust temp. The 60 min trial used 200°C inlet temp and 100°C exhaust temp. The 90 min trial used 200°C inlet and 105°C exhaust. After the three samples at different exhaust temperatures were taken, the dryer conditions were changed to 200°C inlet and 100°C exhaust, where it was believed the dryer was operating at the high end of a moisture target (about 5% moisture).

After the trial was completed the drier was inspected for wet material. The dryer cone and walls had a small buildup of dry material throughout and a small layer of wetter material at a level where the atomizer spread the material. This wet material did not affect the dry material collected during this trial.

### Example 3: Shrimp Trial

The objective of this trial was to test the functionality of shrimp slurry and of a particulate shrimp muscle product, the shrimp slurry being prepared using the pre-drying unit operations from the process described above with reference to Fig. 1, with some of the slurry then being frozen and then thawed and passed through the spray drying unit operation (specifically, a tall form spray dryer) to form a particulate shrimp muscle product. During the spray drying unit operation, the slurry was exposed to high temperatures for short time in order to reduce the moisture content of the slurry. The particulate shrimp muscle product produced in this trial typically had moistures of about 5% in comparison to about 85% moisture of the frozen slurry.

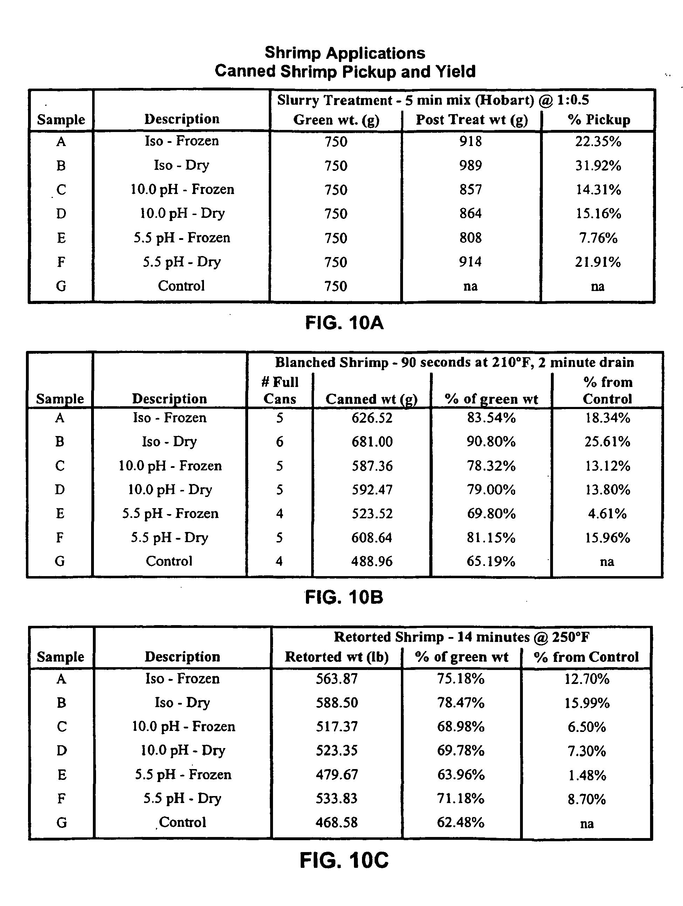

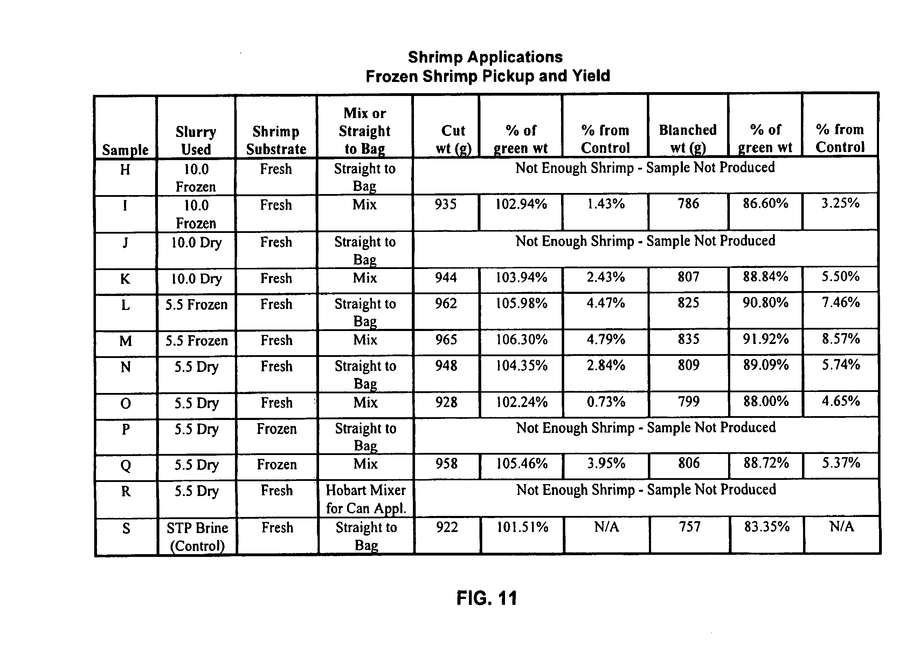

For this experiment, canned shrimp applications and fresh frozen shrimp applications were tested. A control shrimp substrate sample (no application of slurry or dried product samples thereto) was also included in the performance testing. A 10.0 pH frozen slurry (thawed prior to application to shrimp substrate) and dried product samples were compared to a 5.5 pH frozen slurry and dried product samples. A summary of the performance data of the frozen samples and spray dried samples as applied to canned shrimp substrate samples is provided in the charts of Figs. 10A-10C. Also included in the comparison is frozen slurry and dried product samples (shown in Figs. 10A-10C as "Iso-Frozen" and "Iso-Dry") without salt and buffers added during production of the slurry. A summary of the performance data of the frozen and spray dried samples as applied to frozen shrimp substrate samples is provided in a chart of Fig. 11.

The particular pH adjustments for each of the 10.0 and 5.5 pH slurry samples, produced using the pre-drying unit operations illustrated in Fig. 1, involved raising the pH of the slurry in the second Mix Tank to a pH of about 10 for the 10.0 pH sample, and then, for the 5.5 pH sample, reducing the pH from about 10 to about 5.5 with the addition of an acid, and raising the pH back to 9.0 with the addition of a buffer and NaOH (at the Blender step of Fig. 1).

Trial Summary:
- Successfully produced samples treated with reconstituted frozen slurry and particulate shrimp muscle products for analysis.
- Canned shrimp % pickup ranged from 7.76% to 31.92% prior to blanching.
- Post blanching, the samples ranged from 69.80% to 90.80% of green weight and had yields that were 4.61% to 25.61% above control yield.
- Post retort the samples ranged from 63.96% to 78.47% of green weight and had yields that were 1.48% to 15.99% above control.
- For all variables, the particulate shrimp muscle samples had yields that were greater than the frozen reference samples post blanch and post retort.
- The samples that were frozen without the salt and buffers had higher yields than the samples frozen with the salt and buffers. The same trend was observed for the particulate shrimp muscle samples.
- For fresh frozen shrimp, the samples ranged from 101.5% to 106.3% of green weight and had yields that were 0.73% below control to 4.79% above control (after thaw).
- The fresh frozen sample variables ranged from 86.6% to 91.9% of green weight and had yields that were 3.25% to 8.57% above control post blanch.
- Other observations for frozen shrimp:
- A significant difference in pickup was not observed when comparing samples that were mixed for one minute to samples that were added directly to the bag.
- For the 5.5 pH sample, the frozen sample performed better than the particulate shrimp muscle sample in both pickup and cook loss. The opposite was observed for the 10.0 pH sample.
- A significant difference in pickup and yield was not observed when comparing frozen shrimp to fresh shrimp.
- The slurry treated shrimp turned a pink color after treatment. Also, the slurry in the bag was a purple / pink color. This color change was not observed during the treatment of the seabobs for canning trials.

Trial Details:

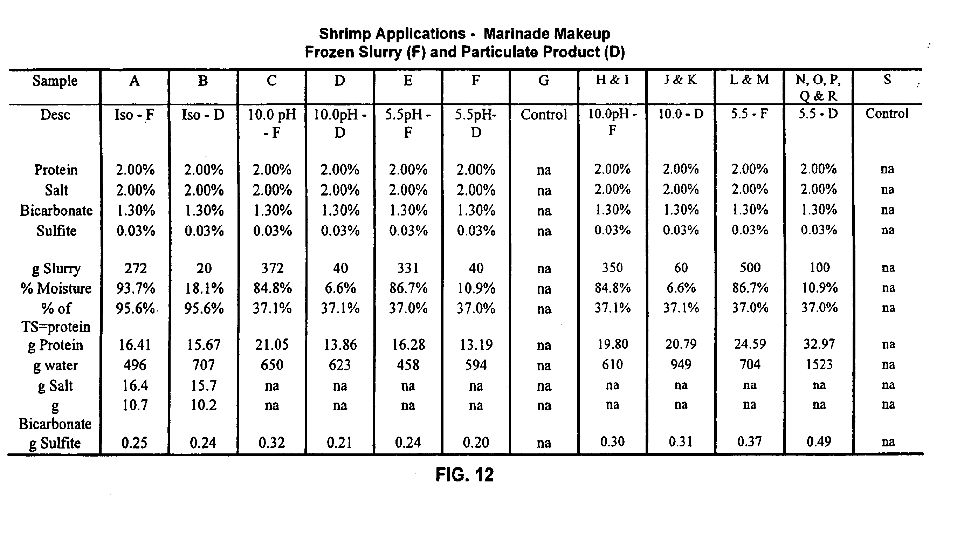

Multiple slurries were used for this experiment. The slurries were produced and then frozen. Some of the frozen material was then dried to produce particulate shrimp muscle product samples. For this trial all samples were produced using the same procedure, similar to the exemplary shrimp process described above with reference to Fig. 1, with the exception of that the "Iso-Frozen" and "Iso-Dry" samples were made without salt and buffers added during slurry production. The functionality of each of the slurry and the particulate product were evaluated on food substrates. The substrates included canned, fresh, and fresh frozen shrimp. In particular, the samples of the frozen slurry were diluted, and the samples of the particulate product were reconstituted, to form a marinade from each sample having 2.0 wt% protein in solution. The marinade formulations for each sample are provided the charts of Figs. 12A and 12B. Since the "Iso-Frozen" and "Iso-Dry" samples were made without salt and buffers added during slurry production, salt and bicarbonate were added to the "Iso-Frozen" and "Iso-Dry" during the preparation of the marinade, as shown in Fig. 12A.

Canned Shrimp

For each sample (with the exception of the control sample), a 2 lb sample of frozen shrimp was placed into a Hobart mixer along with 1 lb of marinade and allowed to mix for 5 minutes at 66 rpm. There was some damage to the shrimp noticed due to the nature of the mixer. After 5 minutes, the shrimp was placed on a sieve and allowed to drain for ~2 minutes. While draining, the shrimp were sprayed with water to remove the surface marinade. The drained shrimp were then weighed and the % pickup for each sample was determined. The % pickup ranged from 7.76% to 31.92% for this trial. A complete list of the values is shown in Fig. 10A.

The shrimp were then blanched for about 1:30 minutes in 98.9°C (210°F) water. The shrimp were drained for two minutes and then sent forward for canning. The shrimp were canned into 307x108 (3-3/16" X 1-8/16") cans. Fill for the cans was 113g (4.0 oz) shrimp and 57g (2.0 oz) brine solution. The brine solution composition for the canned shrimp is provided in Table 6.

| **Table 6: Shrimp Applications - Brine Makeup** | | | |
|---|---|---|---|
| **Brine - Canned** | | **Brine - Frozen** **Control** | |
| Water | 81.34% | Water | 93.29% |
| Sat Brine | 18.08% | STP (sodium tri-polyphosphate) | 4.47% |
| SAPP | 0.54% | Salt | 2.24% |
| Cit Acid | 0.04% | | |
| | | | |
| SAT BRINE | | | |
| Water | 75.89% | | |
| Salt | 24.11% | | |

The total canned weight was measured to determine the percent from green weight after blanching. The samples ranged from 69.80% to 90.80% of green weight and had yields that were 4.61% to 25.61% above control yield (see Fig. 10B). For all variables, the particulate shrimp muscle samples had yields that were greater than the frozen slurry reference samples.

Cans were then placed into a pressure cooker / retort for 14 minutes at 250°F. Post retort, the samples were cooled with water / air and left to dry overnight in the retort. The pressure cooker was used for the retort step. The control samples followed this same process, with the exception of the slurry treatment and Hobart mixing steps.

After retort, three cans for each sample were drained to determine loss during retort. Post retort the samples ranged from 63.96% to 78.47% of green and had yields that were 1.48% to 15.99% above control (see Fig. 10C). For all variables, the particulate shrimp muscle samples had higher yields than the frozen slurry reference samples. Also, the samples that were frozen without the salt and buffers had higher yields than the samples frozen with the salt and buffers. The same trend was observed for the particulate product samples.

As shown in Table 7, the shelf life of the 10.0 pH sample of the particulate shrimp muscle product was also evaluated. In particular, the 10.0 pH sample of particulate product (about 33.8 wt% protein) was stored for about 8 months and then reconstituted to form a marinade (about 2.0 wt% protein) that was mixed with fresh shrimp substrate. The shrimp were placed on a sieve to drain for ~2 minutes, but not washed thereafter. The shrimp were then blanched for about 1:30 minutes in 98.9°C (210°F) water. The shrimp were canned, with the fill for the cans being 133g (4.7 oz) shrimp and 51g (1.8 oz) brine solution (see Table 6 for formulation). The data of Table 7 shows that the post-storage 10.0 pH sample of the particulate product maintained a shelf life, as it still showed improved performance over the control. In particular, the particulate product had yields post blanch and post retort of 8.9% and 12.24%, respectively, above. Further, as compared to the performance testing of the pre-storage 10.0 pH sample of the particulate product (see Sample C of Figs 10A-10C), the post-storage 10.0 pH sample of particulate product had comparable and in some cases improved performance over the pre-storage 10.0 pH sample (e.g., the % of green post blanch was 78.32% for pre-storage sample compared to 94.5% for post-storage sample).

**Table 7: Shrimp Applications - Particular Product Shelf Life Data**

| **Sample** | **10.0 pH Particulate Product** | **Control** |
|---|---|---|
| Starting Shrimp Wt. (lb) | 10 | 10 |
| Post Tumble/Mix Shrimp Wt. (lb) | 11.83 | na |
| % Pickup | 18.30% | na |
| Total Shrimp to Can Post Blanch (lb) | 9.45 | 8.56 |
| % of Green post Blanch | 94.50% | 85.60% |
| % From Control post Blanch | 8.90% | na |
| Shrimp Post Retort (wt) (retort for 19 minutes at 245°F) | 6.71 | 5.49 |
| % of Green post Retort | 67.11% | 54.87% |
| % From Control post Retort | 12.24% | na |

**Frozen Shrimp**

For this trial, fresh shrimp substrates (31-35 white shrimp) were used (which were then frozen after marinade application). One sample of the white shrimp was frozen overnight to compare the use of frozen versus fresh shrimp substrates. The frozen shrimp (seabobs 150+) were thawed in a water bath (in sealed plastic bag) and then drained for 2 minutes prior to treatment. The shrimp moisture was measured to be about 86%.

For each sample, 908 g of shrimp and 246 g of marinade (treated samples) or brine (control sample) were added to a plastic bag. The brine solution composition for the control shrimp is provided above in Table 6. For some of the samples, the shrimp were mixed for one minute prior to being added to the bag to determine whether or not a short mix would aid in pickup. The bag was sealed and the shrimp were placed into a box. These boxes were then placed into the freezer. For all samples containing marinade, the liquid turned a pink/purple color. This color was not observed when using the seabobs for the canning trial, even when the same marinades were used.

After 1 day, the frozen shrimp were removed from the boxes and placed (still in plastic bag) into a water bath with continuous water flow (bath with shrimp allowed to overflow). Once the samples were completely thawed, they were drained (2 minutes) and then weighed to determine % pickup. The samples ranged from 101.5% to 106.3% of green weight and had yields that were 0.73% below control to 4.79% above control.

The samples were blanched for about 1:30 minutes in 98.9°C (210°F) water. The samples were then drained and the yields were determined. Performance data for the marinade-treated samples ranged from 86.6% to 91.9% of green weight and had yields that were 3.25% to 8.57% above control.

### Examples 4-7

The objectives of the trials of Examples 4-7 were to test the functionality of slurry and of a particulate muscle product formed from skipjack tuna, chicken, clams, and catfish, respectively. The slurries of these meat species were prepared using the pre-drying unit operations from the process described above with reference to Fig. 1, with some of the slurry then being frozen and then thawed and passed through the spray drying unit operation to form particulate muscle products of the respective species.

The skipjack tuna, chicken and catfish trials were started with approximately 100 lbs of meat, with water being added at a water:meat ratio of 2:1. The meat and water mixture was recirculated through a shear mill (see shear mill 20 of Fig. 1) for a minimum of 10 minutes. The clam trial started with approximately 68kg (150 lbs) of meat, with water being added at a water:meat ratio of 1:1. The slurry was refined using Brown screens (.030" = 0.76mm holes) (see refiner 24 of Fig. 1) prior to adjusting the pH (see second mix tank 26 of Fig. 1) and adding salt and buffers (see blender 28 of Fig. 1). However, salt and buffers were not added to the chicken slurry during the chicken trial. The slurries were spray dried using a tall form spray dryer with a rotary atomizer (see spray dryer 36 of Fig. 1). The slurries were dried at Niro, Inc. of Columbia, MD ("Niro") using a rotary atomizer having 28 square holes dimensioned 6.3 x 3.2 mm (1/4" x 1/8"). The trials used 200°C inlet temp and 100°C exhaust temp, with a target moisture of the particulate products being a moisture content of 5 percent by weight. As with the spray drying of the albacore tuna slurry described above, the spray dryer at Niro operated at an atomize speed of 30,000 RPM. It should be apparent to one of skill in the art that the process settings (including temperature, rotary atomizer RPMs, and rotary atomizer disc size and hole dimensions) may vary with the evaporative capacity of the spray dryer used. For example, using a larger dryer, such as that provided at Spray-Tek Inc. of Middlesex, NJ ("Spray-Tek"), the slurry may be dried to a target moisture of 5 percent by weight with a rotary atomizer operated at 17,000 RPM, a 227°C inlet temp and a 113°C exhaust temp. Further details concerning the trials of Examples 4-7 will now be described.

### Example 4: Skipjack Tuna Trial

For the skipjack tuna trial, a 9.0 pH Sample of skipjack tuna slurry and a 5.5 pH Sample (pH reference sample) of skipjack tuna slurry were prepared. For the 9.0 pH sample, after the slurry was refined using the Brown screens, the pH was adjusted to about 11 with the addition of NaOH and then reduced the pH to about 9.0 with the addition of HCl. A portion of this 9.0 pH slurry was gathered to make the 5.5 pH sample. Specifically, the 5.5 pH Sample was made by reducing the pH of the gathered 9.0 pH slurry to a pH of 5.5 by the addition of HCl. Salt and carbonate (buffer) were added to each of the 9.0 pH Sample and the 5.5 pH Sample. The slurry samples were then frozen. A portion of the frozen 9.0 pH Sample was later reconstituted into a mixture for spray drying to produce a particulate skipjack muscle product sample.

The particulate product and frozen slurry of the 9.0 pH Sample and the frozen slurry of the 5.5 pH Sample were each produced into a marinade comprised of about 4% skipjack protein, about 2% salt, and about 1.2% carbonate, and the pH was adjusted as needed to a final pH of between about 10.2 and 10. 3. This final pH range is considered to provide the best pick-up by a meat substrate. The salt and carbonate added to the slurries prior to drying or freezing were in such an amount that when the marinade is later made from the particulate product sample or the slurry samples, no additional salt or carbonate needs to be added to make the marinade comprised of about 4% protein, about 2% salt, and about 1.2% carbonate. Thus, aside from any acid or base added for the final pH adjustment, only water is added to the particulate product and frozen slurry samples to form the marinade.

The marinades of the particulate product and frozen slurry samples were each injected into a 1/2 skipjack fish, which was used as the meat substrate, with a target pick-up of the marinade being 15% of the fish green weight. The injected fish was cooked (i.e., "pre-cooked") to 59°C and then cooled (using water spray and then placing in a cold room). Once cooled the injected fish was cleaned, cut, and canned (4 cans per sample). The canning media for each can was 80g (2.85 oz) meat, 34g (1.2 oz) broth, and 57g (2.0 oz) water. The canned samples were then retorted for 113 minutes at 111.7 °C (233°F). A control skipjack substrate sample (no application of slurry or dried product samples thereto) was also included in the performance testing. The control samples were canned and retorted, with the canning media including brine in place of the broth used for the injected fish samples. The broth and brine solution compositions for the canned samples are provided in Table 9. In the table, VB 75 refers to a vegetable broth manufactured by Solae LLC of St. Louis, MO.

Table 8 provides a summary of the performance data of the control skipjack substrate ("Sample D") in comparison with the skipjack substrates injected with marinades of the frozen slurries of the 9.0 pH Sample ("Sample B") and 5.5 pH Sample ("Sample C") and the marinade of the 9.0 pH Sample particulate product ("Sample A"). Table 6 shows that the skipjack injected with the marinade of the particulate product exhibited the greatest overall yield (i.e., the canned skipjack of Sample A had a drain weight that was 95.42% of green weight) and the greatest improvement over the control substrate (at 10.21%). The skipjack injected with marinades of the 9.0 pH Sample (i.e., Samples A and B) also performed better than the 5.5. pH Sample (Sample C) in overall yield.

**Table 8: Skipjack Applications - Summary**

| **Sample** | **A** | **B** | **C** | **D** |
|---|---|---|---|---|
| **Desc** | 9.0 pH Sample - Particulate | 9.0 pH Sample - Frozen | 5.5 pH Sample - Frozen | Control - No injection |
| **Pre-Cook Loss/Gain** | -14.5% | -15.8% | -13.6% | -14.2% |
| **Post Pre-Cook from Green** | -1.38% | -2.88% | -0.48% | -14.17% |
| **Post Pre-Cook from Control** | 12.79% | 11.29% | 13.69% | na |
| **Retort Loss/Gain** | -3.25% | -4.12% | -8.25% | 0.88% |
| **Overall Yield % of Green Wt** | 95.42% | 93.11% | 91.31% | 86.58% |
| **Overall Yield % Improvement over control** | 10.21% | 7.54% | 5.47% | na |

**Table 9: Skipjack Applications - Broth/Brine Makeup**

| | **Broth** | **Brine -Control** |
|---|---|---|
| Water | 94.38% | 96.39% |
| VB 75 | 5.62% | 0.00% |
| Salt | 0.00% | 3.61% |
| SAPP | 0.00% | 0.00% |

### Example 5: Chicken Trial

For the chicken trial, a 7.0 pH Sample of chicken slurry and a 5.5 pH Sample (pH reference sample) of chicken slurry were prepared. For the 7.0 pH sample, after the slurry was refined using the Brown screens, the pH was adjusted to about 11 with the addition of NaOH and then reduced the pH to about 7.0 with the addition of HCl. A portion of this 7.0 pH slurry was gathered to make the 5.5 pH sample by adding HCl to reduce the pH from 9.0 to 5.5. The slurry samples were then frozen. A portion of the frozen 7.0 pH Sample was later reconstituted into a mixture for spray drying to produce a particulate chicken muscle product sample.

The particulate product and frozen slurry the 7.0 pH Sample and the frozen slurry of the 5.5 pH Sample were each produced into a marinade comprised of about 5% chicken protein. The formulation of marinades from the frozen slurry and particulate product samples is shown in Table 11. In this trial, the frozen chicken slurries comprised about 9.10 wt% TS (total solids) of which about 88.7 wt% was protein. Thus, since the frozen chicken slurries comprised 8.07 wt% protein, about 2.8kg (6.2 lbs) of chicken slurry was required to make a 10 lb batch of marinade having 5% protein.

The marinades of the particulate product and frozen slurry samples were each injected into a chicken breast chunk, which was used as the meat substrate, with a target pick-up of the marinade being 15% of the chicken breast chunk green weight. The injected chicken was tumbled for about 12 minutes at 8 RPM and -25" vacuum. The tumbled chicken was cooked (i.e., "pre-cooked") to 76.7°C (170°F) and then placed in an ice bath until the internal temperature was in the range of 4.4 to 15.5°C (40-60°F). The cooled chicken was diced into ~1' x 1.5' chunks, and the chunks were canned and retorted for 140 minutes at 112.8°C (235°F). The canning media for each can was 114g (8.0 oz) meat and 57g (2.0 oz) water. A control chicken substrate sample was also included in the performance testing. The control sample was injected with a control marinade at a target pickup of 15%, canned and retorted. The formulation of the control marinade is shown in Table 11. The pH of the control marinade is approximately 7.5, and the pH of the slurry marinade is approximately 9.5.

As shown in Table 11, "Reed broth" refers to a chicken marinade (ingredients: salt, chicken broth, natural flavor), product number RFT 7002, manufactured by Reed Food Technology, Inc. of Pearl, MS. The formulation of the control marinade shown in Table 11 includes modified food starches (i.e., Firm-tex® and Pure-gel® B980) whereas the slurry marinade includes a natural food starch (i.e., N-Hance® 59). Firm-tex® is a modified food starch derived from waxy maize manufactured by National Starch and Chemical Co. of Bridgewater, NJ. N-Hance® 59 is a potato-based functional native starch manufactured by National Starch and Chemical Co. Pure-gel® B980 is a modified dent corn starch manufactured by Grain Processing Corp. of Muscatine, Iowa. Since government regulations may require a food product label to indicate the product contains a modified ingredient (e.g., modified starch), the use of a natural starch in the slurry marinade may permit the chicken product injected therewith to be a clean label product. It should be understood that the marinade formulation shown in Table 11 is for example only, and any modified or natural food starch, or combination thereof, may be used in marinades in accordance with the present invention. In one embodiment, to allow for clean labeling, only natural vegetable starches (e.g., starches of corn, potato, etc.) are used. In addition to N-Hance® 59, Cargill Gel™ 03420 (native com starch, manufactured by Cargill of Minneapolis, MN), Cargill Gel™ 70001 (native tapioca starch, manufactured by Cargill), Novation® 8300 (native starch prepared from waxy rice, manufactured by National Starch and Chemical Co.), as well as Novation® Prima 300 and Novation® Prima 600 (native starches prepared from waxy corn, manufactured by National Starch and Chemical Co.), are example commercially available natural vegetable starches which may be used in marinades in accordance with the present invention.

Table 10 provides a summary of the performance data of the control chicken substrate ("Sample A") in comparison with the chicken substrates injected with marinades of the frozen slurries of the 7.0 pH Sample ("Sample C") and 5.5 pH Sample ("Sample D") and the marinade of the 7.0 pH Sample particulate product ("Sample B"). The chicken chunks injected with marinades of the 7.0 pH Sample (i.e., Samples B and C) performed better than the control sample (Sample A) and the 5.5. pH Sample (Sample D) in overall yield.

Table 10 shows that the chicken injected with the marinade of the particulate product exhibited the greatest overall yield (with a drain weight at 95.42% of green weight) and improvement over the control substrate (at 10.21% improvement).

**Table 10: Chicken Applications - Summary**

| **Sample** | **A** | **B** | **C** | **D** |
|---|---|---|---|---|
| **Desc** | Control | 7.0 pH Sample - Particulate | 7.0 pH Sample - Frozen | 5.5 pH Sample - Frozen |
| **Pick-up Post Injection** | 15.7% | 15.8% | 15.5% | 15.4% |
| **Pick-up Post Tumble** | 13.7% | 11.9% | 12.3% | 12.1% |
| **Pre-Cook Loss/Gain** | -17.03% | -16.85% | -17.01% | -18.55% |
| **Post Pre-Cook % of Green** | 96.01% | 96.25% | 95.90% | 94.02% |
| **Post Pre-Cook Improvement from Control** | na | 0.25% | -0.12% | -2.07% |
| **Retort Loss/Gain** | -19.53% | -19.84% | -19.53% | -20.47% |
| **Overall Yield % of Green Wt** | 77.26% | 77.15% | 77.17% | 74.78% |
| **Overall Yield % Improvement from Control** | na | -0.14% | -0.12% | -3.21% |
| **Drain Weight** | 64.38% | 64.13% | 64.38% | 63.63% |
| **Drain Weight from Control** | na | -0.39% | 0.00% | -1.17% |

**Table 11: Chicken Applications - Marinade Makeup**

| **Descriptor** | **Control Marinade** | **Frozen Slurry Marinade** |
|---|---|---|
| **Water** | 81.02% | 77.23% |
| **Reed broth** | 13.14% | 13.14% |
| **Phosphate (Buffer)** | 2.86% | 0.00 |
| **Na+Carbonate (Buffer)** | 0.00 | 1.20% |
| **Firm-tex® (Starch)** | 1.49% | 0.00 |
| **Pure-gel® B980 (Starch)** | 1.49% | 0.00 |
| **N-Hance® 59 (Starch)** | 0.00 | 3.43% |
| **Chicken protein** | 0.00 | 5.00% |
| **Soy Protein** | 0.00 | 0.00 |
| **Dry Total** | 18.98% | 22.77% |

### Example 6: Clam Trial

For the clam trial, an 11.0 pH Sample of clam slurry and a 5.5 pH Sample (pH reference sample) of clam slurry were prepared. For the 11.0 pH sample, after the slurry was refined using the Brown screens, the pH was adjusted to about 11 with the addition of NaOH. A portion of this 11.0 pH slurry was gathered to make the 5.5 pH sample by adding HCl to reduce the pH from 11.0 to 5.5. Salt and carbonate (buffer) were added to each of the 11.0 pH Samples and the 5.5 pH Samples. The slurry samples were then frozen. A portion of the frozen 11.0 pH Sample was later reconstituted into a mixture for spray drying to produce a particulate clam muscle product sample.

The particulate product and frozen slurry the 11.0 pH Sample and the frozen slurry of the 5.5 pH Sample were each produced into a marinade comprised of about 2% clam protein, about 2% salt, and about 0.8% carbonate. The pH of the marinade ranged from about 10 to about 11. Specifically, the marinade of the particulate product had a 10.96 pH, a 10.71 pH for the marinade of the 11.0 pH Sample frozen slurry, and a 10.15 pH for the marinade of the 5.5 pH Sample frozen slurry. The salt and carbonate added to the slurries prior to drying or freezing were in such an amount that when the marinade is later made from the particulate product sample or the slurry samples, no additional salt or carbonate needs to be added to make the marinade comprised of about 2% protein, about 2% salt, and about 0.8% carbonate. Thus, aside from any acid or base added for pH adjustment, only water is added to the particulate product and frozen slurry samples to form the marinade.

The marinades of the particulate product and frozen slurry samples were each tumbled with clams, which were used as the meat substrate, at a clam-to-marinade ratio of 2:1. The clams and marinade were tumbled for about 10 minutes at 10 RPM (no vacuum). Post tumble, the samples were drained through a sieve and then canned. The cans were retorted for 33 minutes at 115.6 °C (240°F). The canning media for each can was 93g (3.3 oz) meat and 91g (3.2 oz) brine. A control clam substrate sample was also included in the performance testing. The control sample was tumbled with a control brine, canned and retorted. The canning media for the control sample included 91g (3.2 oz) of the control brine in place of the brine used for 11.0 pH and 5.5 pH Samples. The brine solution compositions for the canned 11.0 pH and 5.5 pH Samples and the control sample are provided in Table 13.

Table 12 provides a summary of the performance data of the control clam substrate ("Sample D") in comparison with the clam substrates tumbled with marinades of the frozen slurries of the 11.0 pH Sample ("Sample B") and 5.5 pH Sample ("Sample C") and the marinade of the 11.0 pH Sample particulate product ("Sample A"). In this example, the surface application of the clams with marinades of the 11.0 pH Sample frozen slurry sample (Sample B) performed better than the control sample (Sample A) and the 5.5. pH Sample (Sample D), exhibiting the greatest overall yield (with a drain weight, or post retort, weight at 104.19% of green weight) and improvement over the control substrate (at 9.50% improvement).

**Table 12: Clam Applications - Summary**

| **Sample** | **A** | **B** | **C** | **D** |
|---|---|---|---|---|
| **Desc** | 11.0 pH Sample - Particulate | 11.0 pH Sample - Frozen | 5.5 pH Sample - Frozen | Control - no Slurry |
| **Green Wt. (lb)** | 5.00 | 5.00 | 5.00 | 4.00 |
| **Post Tumble Clam Wt. (lb)** | 5.91 | 6.14 | 5.71 | 4.35 |
| **% Pickup** | 18.20% | 22.80% | 14.20% | na |
| **Clam Post Retort Wt. (lb)** | 4.99 | 5.21 | 5.00 | 3.81 |
| **Retort Loss/Gain** | 84.47% | 84.85% | 87.50% | 87.50% |
| **% of Green, Post Retort** | 99.84% | 104.19% | 99.93% | 95.16% |
| **% Improvement over Control** | 4.93% | 9.50% | 5.01% | na |

**Table 13: Clam Applications - Brine Makeup**

| | **Control Brine** **(Sample D)** | **Brine** **(Samples A-C)** |
|---|---|---|
| water | 80.21 % | 80.86% |
| clam juice | 15.13% | 15.26% |
| salt | 1.89% | 1.91% |
| sugar | 1.89% | 1.91% |
| STP | 0.81% | - |
| EDTA | 0.06% | 0.06% |

### Example 7: Catfish Trial

For the catfish trial, an 11.0 pH Sample of catfish slurry and a 5.5 pH Sample (pH reference sample) of catfish slurry were prepared. For the 11.0 pH sample, after the slurry was refined using the Brown screens, the pH was adjusted to about 11 with the addition of NaOH. A portion of this 11.0 pH slurry was gathered to make the 5.5 pH sample by adding HCl to reduce the pH from 11.0 to 5.5. Salt and bicarbonate (buffer) were added to each of the 11.0 pH Sample and the 5.5 pH Sample. The slurry samples were then frozen. The frozen 11.0 pH Sample was later reconstituted into a mixture for spray drying to produce a particulate catfish muscle product sample.

The particulate product of the 11.0 pH Sample and the frozen slurry of the 5.5 pH Sample were each produced into a marinade comprised of about 2% catfish protein, about 2.5% salt, and about 1.68% bicarbonate, and the pH was adjusted as needed to a final pH of between about 10.2 and 10.3. The salt and carbonate added to the slurries prior to drying or freezing were in such an amount that when the marinade is later made from the particulate product sample or the slurry samples, no additional salt or carbonate needs to be added to make the marinade comprised of about 2% protein, about 2.5% salt, and about 1.68% carbonate. Thus, aside from any acid or base added for the final pH adjustment, only water is added to the particulate product and frozen slurry samples to form the marinade.

The marinades of the particulate product and frozen slurry samples were injected into catfish fillets, which were used as the meat substrate, with a target pick-up of the marinade being 8% of the fish green weight. The injected samples were packed and held in a refrigerator for two days. The samples were weight after each day the samples were held in the refrigerator to determine drip loss from storage. After two days refrigeration, the injected samples were cooked to 71.1°C (160°F). A control catfish substrate sample (no application of slurry or dried product samples thereto) was also included in the performance testing.

Table 14 provides a summary of the performance data of the control catfish substrate in comparison with the catfish substrates injected with marinades of the frozen slurry of the 5.5 pH Sample and the marinade of the 11.0 pH Sample particulate product. Table 14 shows that the catfish injected with the marinade of the particulate product performed better than the 5.5. pH Sample in overall yield (i.e., the post cook weight of the particulate product sample was 94.79% of green weight, whereas the post cook weight of the 5.5 pH frozen slurry sample was only 80.73% of green weight).

**Table 14: Catfish Applications - Summary**

| **INITIAL DATA** | | | | |
|---|---|---|---|---|
| **Sample #** | **Green Wt (lb)** | **Post Injection Wt (lb)** | **% Pickup** | |
| 11.0 pH - Particulate | 4.22 | 4.58 | 8.53% | |
| 11.0 pH - Frozen | 4.36 | 4.74 | 8.72% | |
| Control | 4.18 | 4.18 | na | |

| **DAY 1** | | | | |
|---|---|---|---|---|
| **Sample #** | **Drip Loss** | **Drip Improvement from Control** | **% of Green** | **% Imp over Control** |
| 11.0 pH - Particulate | 1.53% | -1.22% | 106.87% | 7.21% |
| 11.0 pH - Frozen | 2.74% | -2.43% | 105.73% | 6.06% |
| Control | 0.31% | na | 99.69% | na |

| **DAY 2** | | | | |
|---|---|---|---|---|
| **Sample #** | **Drip Loss** | **Drip Improvement from Control** | **% of Green** | **% Imp over Control** |
| 11.0 pH - Particulate | 2.84% | -2.53% | 105.45% | 5.78% |
| 11.0 pH - Frozen | 4.01% | -3.70% | 104.36% | 4.68% |
| Control | 0.31% | na | 99.69% | na |

| **POST COOKING** | | | | |
|---|---|---|---|---|
| **Sample #** | **Cook Loss** | **Cook Improvement from Control** | **% of Green** | **% Imp over Control** |
| 11.0 pH- Particulate | 12.66% | -8.05% | 94.79% | -0.63% |
| 11.0 pH - Frozen | 25.74% | -21.12% | 80.73% | -15.36% |
| Control | 4.61% | na | 95.39% | na |

While various embodiments of the present invention have been described above, it should be understood that they have been presented by way of example, and not limitation. It will be apparent to persons skilled in the relevant art(s) that various changes in form and detail can be made therein . For example, as a modification to the process shown in Fig. 1, instead of adding water at first mix tank 18, an aqueous alkaline solution can be added to the ground meat to form an alkaline slurry. Any further pH adjustments of the alkaline slurry that may have been made in second mix tank 26 are instead made in first mix tank 18, allowing second mix tank 26 to be removed from the process. Thus, the alkaline slurry can be pumped to shear mill 20, then to mix/holding tank 22 and refiner 24 and then directly to blender 28. Thus, the breadth and scope of the present invention should not be limited by any of the above-described exemplary embodiments, but is defined only in accordance with the following claims.

## Claims

1. A process for improving water-binding capacity of a substrate animal muscle, comprising:
providing a slurry of animal muscle and water;
increasing the pH of the slurry to an alkaline level sufficient to solubilize at least a portion of the animal protein in the animal muscle so as to form an alkaline slurry;
maintaining the pH of the alkaline slurry at a level sufficient to prevent coagulation of the animal protein;
drying the alkaline slurry to form a substantially dry particulate animal muscle product;
reconstituting the particulate animal muscle product to form a marinade; and
applying the marinade to a substrate animal muscle.

2. The process of claim 1, further comprising:
removing animal connective tissue from one of the slurry and the alkaline slurry.

3. The process of claim 2, wherein the step of drying includes spray-drying the alkaline slurry.

4. The process of claim 3, wherein the step of applying includes injecting the marinade into the substrate animal muscle.

5. The process of claim 1, wherein the step of increasing the pH of the slurry includes increasing the pH of the slurry to a pH of about 11 to form the alkaline slurry, and wherein the step of maintaining the pH of the alkaline slurry includes:
reducing the pH of the alkaline slurry from the pH of about 11 to a pH of about 9;
adding a salt and a buffer to the alkaline slurry; and
increasing the pH of the alkaline from the pH of about 9 to a pH in the range of 10 to 10.5, wherein the alkaline slurry has a pH in the range of 10 to 10.5 prior to being dried.

6. The process of claim 5, wherein water is added to the particulate animal muscle product to reconstitute the particulate animal muscle product.

7. The process of claim 1, wherein water, a salt, and a buffer are added to the particulate animal muscle product to reconstitute the particulate animal muscle product.

8. The process of claim 1, wherein the step of increasing the pH of the slurry includes increasing the pH of the slurry to a pH of about 11 to form the alkaline slurry, and wherein the step of maintaining the pH of the alkaline slurry includes reducing the pH of the alkaline slurry from the pH of about 11 to a pH in the range of 7 to 9.

9. The process of claim 1, wherein the alkaline slurry has a pH in the range of 9.5 to 10.5 prior to being dried.

10. The process of claim 1, wherein the particulate animal muscle product has a moisture content of less than about 10 percent by weight and an animal protein content in the range of 40 percent to 60 percent by weight.

11. The process of claim 1, wherein the particulate animal muscle product has an animal protein content in the range of 25 percent to 40 percent by weight.

12. The process of claim 1, wherein the slurry of animal muscle is a slurry of fish muscle.

13. The process of claim 12, wherein the substrate animal muscle includes fish muscle.

14. The process of claim 1, wherein the alkaline slurry includes animal protein solids in the amount of less than 10 percent by weight of the alkaline slurry.

15. The process of claim 1, wherein the marinade includes about 2 percent of a salt by weight and about 1 percent to about 2 percent of a buffer by weight, and wherein the marinade has a pH in the range of 10 to 10.5.

16. A process for improving water-binding capacity of a substrate animal muscle, comprising:
providing an animal muscle product formed by a process including the steps of:
providing a slurry of animal muscle and water;
increasing the pH of the slurry to an alkaline level sufficient to solubilize at least a portion of the animal protein in the animal muscle so as to form an alkaline slurry; and
maintaining the pH of the alkaline slurry at a level sufficient to prevent coagulation of the animal protein; and
applying the animal muscle product to a substrate animal muscle.

17. The process of claim 16, wherein the process forming the animal muscle product further includes the step of drying the alkaline slurry to form a dried animal muscle product, wherein the step of applying includes applying the dried animal muscle product to a surface of the substrate animal muscle.

18. The process of claim 17, wherein the step of applying includes reconstituting the dried animal muscle product with water, wherein the reconstituted dried animal muscle product is applied to the substrate animal muscle.

19. A process for making a composition for improving water-binding capacity of a substrate animal muscle, comprising:
providing a slurry of animal muscle and water;
increasing the pH of the slurry to an alkaline level sufficient to solubilize at least a portion of the animal protein in the animal muscle so as to form an alkaline slurry; and
maintaining the pH of the alkaline slurry at a level sufficient to prevent coagulation of the animal protein.

20. The process of claim 19, further comprising drying the alkaline slurry.

21. The process of claim 19, wherein the step of increasing the pH of the slurry includes increasing the pH of the slurry to a pH of about 11 to form the alkaline slurry, and wherein the step of maintaining the pH of the alkaline slurry includes reducing the pH of the alkaline slurry from the pH of about 11 to a final pH in the range of 10 to 10.5.

22. The process of claim 19, wherein the step of increasing the pH of the slurry includes increasing the pH of the slurry to a pH of about 11 to form the alkaline slurry, and wherein the step of maintaining includes maintaining the pH of the alkaline slurry at a pH of about 11.

23. The process of claim 19, wherein the step of increasing the pH of the slurry includes increasing the pH of the slurry to a pH of about 11 to form the alkaline slurry, and wherein the step of maintaining includes reducing the pH of the alkaline slurry from the pH of about 11 to a pH in the range of 7 to 9.

24. The process of claim 19, wherein the alkaline slurry includes animal protein solids in the amount of less than 10 percent by weight of the alkaline slurry.

25. A process for improving water-binding capacity of a substrate animal muscle, comprising:
providing animal muscle;
adding an aqueous alkaline solution to the animal muscle to form an alkaline slurry, wherein the pH of the aqueous alkaline solution is sufficiently alkaline to solubilize at least a portion of the animal protein in the animal muscle;
maintaining the pH of the alkaline slurry at a level sufficient to prevent coagulation of the animal protein;
drying the alkaline slurry to form a substantially dry particulate animal muscle product;
reconstituting the particulate animal muscle product to form a marinade; and
applying the marinade to a substrate animal muscle.

26. The process of claim 25, wherein the alkaline slurry has an initial pH of about 11, wherein the step of maintaining the pH of the alkaline slurry includes adjusting the pH of the alkaline slurry to a pH in the range of 7 to 10.5, wherein the alkaline slurry has a pH in the range of 6.5 to 10.5 prior to being dried.

27. The process of claim 26, wherein the step of maintaining the pH of the alkaline slurry includes adjusting the pH of the alkaline slurry to a pH of about 9, wherein the alkaline slurry has a pH in the range of 9.5 to 10.5 prior to being dried.

28. The process of claim 25, wherein the alkaline slurry includes animal protein solids in the amount of less than 10 percent by weight of the alkaline slurry.

## Patentansprüche

1. Ein Verfahren zur Verbesserung des Wasserbindungsvermögens eines Tiermuskelsubstrats, umfassend:
Bereitstellen einer Aufschlämmung aus Tiermuskel und Wasser;
Erhöhen des pH-Werts der Aufschlämmung auf ein alkalisches Level, ausreichend, um mindestens einen Teil des Tierproteins in dem Tiermuskel zu solubilisieren, um eine alkalische Aufschlämmung zu bilden;
Aufrechterhalten des pH-Werts der alkalischen Aufschlämmung auf einem Level, ausreichend, um Koagulation des Tierproteins zu verhindern;
Trocknen der alkalischen Aufschlämmung, um ein im Wesentlichen trockenes teilchenförmiges Tiermuskelprodukt zu bilden;
Wiederherstellen des teilchenförmigen Tiermuskelprodukts, um eine Marinade zu bilden; und
Auftragen der Marinade auf ein Tiermuskelsubstrat.

2. Das Verfahren nach Anspruch 1, weiter umfassend:
Entfernen von Tierbindegewebe aus Einem aus der Aufschlämmung und der alkalischen Aufschlämmung.

3. Das Verfahren nach Anspruch 2, wobei der Schritt des Trocknens das Sprühtrocknen der alkalischen Aufschlämmung enthält.

4. Das Verfahren nach Anspruch 3, wobei der Schritt des Auftragens das Einspritzen der Marinade in das Tiermuskelsubstrat enthält.

5. Das Verfahren nach Anspruch 1, wobei der Schritt des Erhöhens des pH-Werts der Aufschlämmung das Erhöhen des pH-Werts der Aufschlämmung auf einen pH-Wert von etwa 11 enthält, um die alkalische Aufschlämmung zu bilden, und wobei der Schritt des Aufrechterhaltens des pH-Werts der alkalischen Aufschlämmung enthält:
Verringern des pH-Werts der alkalischen Aufschlämmung von dem pH-Wert von etwa 11 auf einen pH-Wert von etwa 9;
Zugeben eines Salzes und eines Puffers zu der alkalischen Aufschlämmung; und
Erhöhen des pH-Werts der Base von dem pH-Wert von etwa 9 auf einen pH-Wert in dem Bereich von 10 bis 10,5, wobei die alkalische Aufschlämmung vor dem Trocknen einen pH-Wert in dem Bereich von 10 bis 10,5 aufweist.

6. Das Verfahren nach Anspruch 5, wobei Wasser zu dem teilchenförmigen Tiermuskelprodukt gegeben wird, um das teilchenförmige Tiermuskelprodukt wiederherzustellen.

7. Das Verfahren nach Anspruch 1, wobei Wasser, ein Salz und ein Puffer zu dem teilchenförmigen Tiermuskelprodukt gegeben werden, um das teilchenförmige Tiermuskelprodukt wiederherzustellen.

8. Das Verfahren nach Anspruch 1, wobei der Schritt des Erhöhens des pH-Werts der Aufschlämmung das Erhöhen des pH-Werts der Aufschlämmung auf einen pH-Wert von etwa 11 enthält, um die alkalische Aufschlämmung zu bilden, und wobei der Schritt des Aufrechterhaltens des pH-Werts der alkalischen Aufschlämmung das Verringern des pH-Werts der alkalischen Aufschlämmung von dem pH-Wert von etwa 11 auf einen pH-Wert in dem Bereich von 7 bis 9 enthält.

9. Das Verfahren nach Anspruch 1, wobei die alkalische Aufschlämmung vor dem Trocknen einen pH-Wert in dem Bereich von 9,5 bis 10,5 aufweist.

10. Das Verfahren nach Anspruch 1, wobei das teilchenförmige Tiermuskelprodukt einen Feuchtigkeitsgehalt von weniger als etwa 10 Gew.-% und einen Tierproteingehalt in dem Bereich von 40 bis 60 Gew.-% aufweist.

11. Das Verfahren nach Anspruch 1, wobei das teilchenförmige Tiermuskelprodukt einen Tierproteingehalt in dem Bereich von 25 bis 40 Gew.-% aufweist.

12. Das Verfahren nach Anspruch 1, wobei die Tiermuskelaufschlämmung eine Aufschlämmung aus Fischmuskel ist.

13. Das Verfahren nach Anspruch 12, wobei das Tiermuskelsubstrat Fischmuskel enthält.

14. Das Verfahren nach Anspruch 1, wobei die alkalische Aufschlämmung Tierproteinfeststoffe in der Menge von weniger als 10 Gew.-% der alkalischen Aufschlämmung enthält.

15. Das Verfahren nach Anspruch 1, wobei die Marinade etwa 2 Gew.-% eines Salzes und etwa 1 bis etwa 2 Gew.-% eines Puffers enthält und wobei die Marinade einen pH-Wert in dem Bereich von 10 bis 10,5 aufweist.

16. Ein Verfahren zur Verbesserung des Wasserbindungsvermögens eines Tiermuskelsubstrats, umfassend:
Bereitstellen eines Tiermuskelprodukts, gebildet durch ein Verfahren, enthaltend die Schritte:
Bereitstellen einer Aufschlämmung aus Tiermuskel und Wasser;
Erhöhen des pH-Werts der Aufschlämmung auf ein alkalisches Level, ausreichend, um mindestens einen Teil des Tierproteins in dem Tiermuskel zu solubilisieren, um eine alkalische Aufschlämmung zu bilden; und
Aufrechterhalten des pH-Werts der alkalischen Aufschlämmung auf einem Level, ausreichend, um Koagulation des Tierproteins zu verhindern; und
Auftragen des Tiermuskelprodukts auf ein Tiermuskelsubstrat.

17. Das Verfahren nach Anspruch 16, wobei das Verfahren zum Bilden des Tiermuskelprodukts weiter den Schritt des Trocknens der alkalischen Aufschlämmung enthält, um ein getrocknetes Tiermuskelprodukt zu bilden, wobei der Schritt des Auftragens das Auftragen des getrockneten Tiermuskelprodukts auf eine Oberfläche des Tiermuskelsubstrats enthält.

18. Das Verfahren nach Anspruch 17, wobei der Schritt des Auftragens das Wiederherstellen des getrockneten Tiermuskelprodukts mit Wasser enthält, wobei das wiederhergestellte getrocknete Tiermuskelprodukt auf das Tiermuskelsubstrat aufgetragen wird.

19. Ein Verfahren zur Herstellung einer Zusammensetzung zur Verbesserung des Wasserbindungsvermögens eines Tiermuskelsubstrats, umfassend:
Bereitstellen einer Aufschlämmung aus Tiermuskel und Wasser;
Erhöhen des pH-Werts der Aufschlämmung auf ein alkalisches Level, ausreichend, um mindestens einen Teil des Tierproteins in dem Tiermuskel zu solubilisieren, um eine alkalische Aufschlämmung zu bilden; und
Aufrechterhalten des pH-Werts der alkalischen Aufschlämmung auf einem Level, ausreichend, um Koagulation des Tierproteins zu verhindern.

20. Das Verfahren nach Anspruch 19, weiter umfassend das Trocknen der alkalischen Aufschlämmung.

21. Das Verfahren nach Anspruch 19, wobei der Schritt des Erhöhens des pH-Werts der Aufschlämmung das Erhöhen des pH-Werts der Aufschlämmung auf einen pH-Wert von etwa 11 enthält, um die alkalische Aufschlämmung zu bilden, und wobei der Schritt des Aufrechterhaltens des pH-Werts der alkalischen Aufschlämmung das Verringern des pH-Werts der alkalischen Aufschlämmung von dem pH-Wert von etwa 11 auf einen letztendlichen pH-Wert in dem Bereich von 10 bis 10,5 enthält.

22. Das Verfahren nach Anspruch 19, wobei der Schritt des Erhöhens des pH-Werts der Aufschlämmung das Erhöhen des pH-Werts der Aufschlämmung auf einen pH-Wert von etwa 11 enthält, um die alkalische Aufschlämmung zu bilden, und wobei der Schritt des Aufrechterhaltens das Aufrechterhalten des pH-Werts der alkalischen Aufschlämmung bei einem pH-Wert von etwa 11 enthält.

23. Das Verfahren nach Anspruch 19, wobei der Schritt des Erhöhens des pH-Werts der Aufschlämmung das Erhöhen des pH-Werts der Aufschlämmung auf einen pH-Wert von etwa 11 enthält, um die alkalische Aufschlämmung zu bilden, und wobei der Schritt des Aufrechterhaltens das Verringern des pH-Werts der alkalischen Aufschlämmung von dem pH-Wert von etwa 11 auf einen pH-Wert in dem Bereich von 7 bis 9 enthält.

24. Das Verfahren nach Anspruch 19, wobei die alkalische Aufschlämmung Tierproteinfeststoffe in der Menge von weniger als 10 Gew.-% der alkalischen Aufschlämmung enthält.

25. Ein Verfahren zur Verbesserung des Wasserbindungsvermögens eines Tiermuskelsubstrats, umfassend:
Bereitstellen von Tiermuskel;
Hinzufügen einer wässrigen alkalischen Lösung zu dem Tiermuskel, um eine alkalische Aufschlämmung zu bilden, wobei der pH-Wert der wässrigen alkalischen Lösung ausreichend alkalisch ist, um mindestens einen Teil des Tierproteins in dem Tiermuskel zu solubilisieren;
Aufrechterhalten des pH-Werts der alkalischen Aufschlämmung auf einem Level, ausreichend, um Koagulation des Tierproteins zu verhindern;
Trocknen der alkalischen Aufschlämmung, um ein im Wesentlichen trockenes teilchenförmiges Tiermuskelprodukt zu bilden;
Wiederherstellen des teilchenförmigen Tiermuskelprodukts, um eine Marinade zu bilden; und
Auftragen der Marinade auf ein Tiermuskelsubstrat.

26. Das Verfahren nach Anspruch 25, wobei die alkalische Aufschlämmung einen Ausgangs-pH-Wert von etwa 11 aufweist, wobei der Schritt des Aufrechterhaltens des pH-Werts der alkalischen Aufschlämmung das Einstellen des pH-Werts der alkalischen Aufschlämmung auf einen pH-Wert in dem Bereich von 7 bis 10,5 enthält, wobei die alkalische Aufschlämmung vor dem Trocknen einen pH-Wert in dem Bereich von 6,5 bis 10,5 aufweist.

27. Das Verfahren nach Anspruch 26, wobei der Schritt des Aufrechterhaltens des pH-Werts der alkalischen Aufschlämmung das Einstellen des pH-Werts der alkalischen Aufschlämmung auf einen pH-Wert von etwa 9 enthält, wobei die alkalische Aufschlämmung vor dem Trocknen einen pH-Wert in dem Bereich von 9,5 bis 10,5 aufweist.

28. Das Verfahren nach Anspruch 25, wobei die alkalische Aufschlämmung Tierproteinfeststoffe in der Menge von weniger als 10 Gew.-% der alkalischen Aufschlämmung enthält.

## Revendications

1. Procédé pour améliorer la capacité de liaison à l'eau d'un substrat de muscle d'animal, comprenant :
la fourniture d'une suspension épaisse de muscle animal et d'eau ;
l'augmentation du pH de la suspension épaisse à un niveau alcalin suffisant pour solubiliser au moins une partie de la protéine animale dans le muscle animal de manière à former une suspension épaisse alcaline ;
le maintien du pH de la suspension épaisse alcaline à un niveau suffisant pour empêcher la coagulation des protéines animales ;
le séchage de la suspension épaisse alcaline pour former un produit de muscle animal particulaire pratiquement sec ;
la reconstitution du produit de muscle animal particulaire pour former une marinade ; et
l'application de la marinade sur un substrat de muscle d'animal.

2. Procédé selon la revendication 1, comprenant en outre :
l'élimination du tissu conjonctif animal de l'une de la suspension épaisse et de la suspension épaisse alcaline.

3. Procédé selon la revendication 2, dans lequel l'étape de séchage comprend le séchage par pulvérisation de la suspension épaisse alcaline.

4. Procédé selon la revendication 3, dans lequel l'étape d'application comprend l'injection de la marinade dans le substrat de muscle d'animal.

5. Procédé selon la revendication 1, dans lequel l'étape d'augmentation du pH de la suspension épaisse comprend l'augmentation du pH de la suspension épaisse à un pH d'environ 11 pour former la suspension épaisse alcaline, et dans lequel l'étape de maintien du pH de la suspension épaisse alcaline comprend :
la réduction du pH de la suspension épaisse alcaline du pH d'environ 11 à un pH d'environ 9 ;
l'addition d'un sel et d'un tampon à la suspension épaisse alcaline ; et
l'augmentation du pH de la suspension épaisse alcaline du pH d'environ 9 à un pH dans la plage de 10 à 10,5, où la suspension épaisse alcaline a un pH dans la plage de 10 à 10,5 avant d'être séchée.

6. Procédé selon la revendication 5, dans lequel de l'eau est ajoutée au produit de muscle animal particulaire pour reconstituer le produit de muscle animal particulaire.

7. Procédé selon la revendication 1, dans lequel de l'eau, un sel et un tampon sont ajoutés au produit de muscle animal particulaire pour reconstituer le produit de muscle animal particulaire.

8. Procédé selon la revendication 1, dans lequel l'étape d'augmentation du pH de la suspension épaisse comprend l'augmentation du pH de la suspension épaisse à un pH d'environ 11 pour former la suspension épaisse alcaline, et dans lequel l'étape de maintien du pH de la suspension épaisse alcaline comprend la réduction du pH de la suspension épaisse alcaline du pH d'environ 11 à un pH dans la plage de 7 à 9.

9. Procédé selon la revendication 1, dans lequel la suspension épaisse alcaline a un pH dans la plage de 9,5 à 10,5 avant d'être séchée.

10. Procédé selon la revendication 1, dans lequel le produit de muscle animal particulaire a une teneur en humidité inférieure à environ 10 pour cent en poids et une teneur en protéines animales dans la plage de 40 pour cent à 60 pour cent en poids.

11. Procédé selon la revendication 1, dans lequel le produit de muscle animal particulaire a une teneur en protéines animales dans la plage de 25 pour cent à 40 pour cent en poids.

12. Procédé selon la revendication 1, dans lequel la suspension épaisse du muscle animal est une suspension épaisse de muscle de poisson.

13. Procédé selon la revendication 12, dans lequel le substrat de muscle d'animal comprend du muscle de poisson.

14. Procédé selon la revendication 1, dans lequel la suspension épaisse alcaline comprend de la matière sèche de protéine animale dans la quantité inférieure à 10 pour cent en poids de la suspension épaisse alcaline.

15. Procédé selon la revendication 1, dans lequel la marinade comprend environ 2 pour cent d'un sel en poids et environ 1 pour cent à environ 2 pour cent d'un tampon en poids, et dans lequel la marinade à un pH dans la plage de 10 à 10,5.

16. Procédé permettant d'améliorer la capacité de liaison à l'eau d'un substrat de muscle d'animal, comprenant :
la fourniture d'un produit de muscle animal formé par un procédé comprenant les étapes consistant à :
fournir une suspension épaisse de muscle animal et d'eau ;
augmenter le pH de la suspension épaisse à un niveau alcalin suffisant pour solubiliser au moins une partie des protéines animales dans le muscle animal de manière à former une suspension épaisse alcaline ; et
maintenir le pH de la suspension épaisse alcaline à un niveau suffisant pour empêcher la coagulation des protéines animales ; et
l'application du produit de muscle animal à un substrat de muscle d'animal.

17. Procédé selon la revendication 16, où le procédé de formation du produit de muscle animal comprend en outre l'étape de séchage de la suspension épaisse alcaline pour former un produit de muscle animal séché, où l'étape d'application comprend l'application du produit de muscle animal séché sur une surface de substrat de muscle d'animal.

18. Procédé selon la revendication 17, dans lequel l'étape d'application comprend la reconstitution du produit de muscle animal séché avec de l'eau, où le produit de muscle animal séché reconstitué est appliqué sur le substrat de muscle d'animal.

19. Procédé de fabrication d'une composition permettant d'améliorer la capacité de liaison à l'eau d'un substrat de muscle d'animal, comprenant :
la fourniture d'une suspension épaisse de muscle animal et d'eau ;
l'augmentation du pH de la suspension épaisse à un niveau alcalin suffisant pour solubiliser au moins une partie de la protéine animale dans le muscle animal de manière à former une suspension épaisse alcaline ; et
le maintien du pH de la suspension épaisse alcaline à un niveau suffisant pour empêcher la coagulation des protéines animales.

20. Procédé selon la revendication 19, comprenant en outre le séchage de la suspension épaisse alcaline.

21. Procédé selon la revendication 19, dans lequel l'étape d'augmentation du pH de la suspension épaisse comprend l'augmentation du pH de la suspension épaisse à un pH d'environ 11 pour former la suspension épaisse alcaline, et dans lequel l'étape de maintien du pH de la suspension épaisse alcaline comprend la réduction du pH de la suspension épaisse alcaline du pH d'environ 11 à un pH final dans la plage de 10 à 10,5.

22. Procédé selon la revendication 19, dans lequel l'étape d'augmentation du pH de la suspension épaisse comprend l'augmentation du pH de la suspension épaisse à un pH d'environ 11 pour former la suspension épaisse alcaline, et dans lequel l'étape de maintien comprend le maintien du pH de la suspension épaisse alcaline à un pH d'environ 11.

23. Procédé selon la revendication 19, dans lequel l'étape d'augmentation du pH de la suspension épaisse comprend l'augmentation du pH de la suspension épaisse à un pH d'environ 11 pour former la suspension épaisse alcaline, et dans lequel l'étape de maintien comprend la réduction du pH de la suspension épaisse alcaline du pH d'environ 11 à un pH dans la plage de 7 à 9.

24. Procédé selon la revendication 19, dans lequel la suspension épaisse alcaline comprend de la matière sèche de protéine animale dans la quantité inférieure à 10 pour cent en poids de la suspension épaisse alcaline.

25. Procédé permettant d'améliorer la capacité de liaison à l'eau d'un substrat de muscle d'animal, comprenant :
la fourniture de muscle animal ;
l'addition d'une solution aqueuse alcaline au muscle animal pour former une suspension épaisse alcaline, où le pH de la solution aqueuse alcaline est suffisamment alcalin pour solubiliser au moins une partie de la protéine animale dans le muscle animal ;
le maintien du pH de la suspension épaisse alcaline à un niveau suffisant pour empêcher la coagulation de la protéine animale ;
le séchage de la suspension épaisse alcaline pour former un produit de muscle animal particulaire pratiquement sec ;
la reconstitution du produit de muscle animal particulaire pour former une marinade ; et
l'application de la marinade sur un substrat de muscle d'animal.

26. Procédé selon la revendication 25, dans lequel la suspension épaisse alcaline a un pH initial d'environ 11, dans lequel l'étape de maintien du pH de la suspension épaisse alcaline comprend l'ajustement du pH de la suspension épaisse alcaline à un pH dans la plage de 7 à 10,5, où la suspension épaisse alcaline a un pH dans la plage de 6,5 à 10,5 avant d'être séchée.

27. Procédé selon la revendication 26, dans lequel l'étape de maintien du pH de la suspension épaisse alcaline comprend l'ajustement du pH de la suspension épaisse alcaline à un pH d'environ 9, où la suspension épaisse alcaline a un pH dans la plage de 9,5 à 10,5 avant d'être séchée.

28. Procédé selon la revendication 25, dans lequel la suspension épaisse alcaline comprend de la matière sèche de protéine animale dans la quantité inférieure à 10 pour cent en poids de la suspension épaisse alcaline.
